# EUROPÄISCHE PATENTSCHRIFT

(11) **EP 2 315 730 B1**
(45) Veröffentlichungstag und Bekanntmachung des Hinweises auf die Patenterteilung: **01.07.2020**
(21) Anmeldenummer: 09777959.9
(22) Anmeldetag: 19.08.2009
(51) Int. Cl.: C04B 16/04, C04B 26/06, C04B 26/14, C08G 59/40, C08L 63/00

(54) **HÄRTBARE POLYMERMISCHUNGEN**
CURABLE POLYMER MIXTURES
MÉLANGES DE POLYMÈRES DURCISSABLES

(30) Priorität: 19.08.2008 DE 102008038407
(43) Veröffentlichungstag der Anmeldung: 04.05.2011
(73) Patentinhaber: BYK-Chemie GmbH, 46483 Wesel (DE)
(72) Erfinder: NAGELSDIEK, René, 46499 Hamminkeln (DE); GÖBELT, Bernd, 46487 Wesel (DE); PRITSCHINS, Wolfgang, 46487 Wesel (DE); GREEFRATH, Dorothée, 45481 Mülheim an der Ruhr (DE); REMME, Stephan, 47475 Kamp-Lintfort (DE); ESSER, Andrea, 46485 Wesel (DE)
(74) Vertreter: Kutzenberger Wolff & Partner
(86) Internationale Anmeldenummer: PCT/EP2009/005993
(87) Internationale Veröffentlichungsnummer: WO 2010/020401

(56) Entgegenhaltungen:
- EP-A1- 0 570 611
- WO-A1-2007/111452

## Beschreibung

Die vorliegende Erfindung betrifft härtbare, Zuschlagsstoffe aufweisende Polymermischungen umfassend I) als Vermittleradditiv wenigstens ein mindestens oligomeres Additionsprodukt mit hydrolysierbaren Silangruppen und weiteren funktionellen Gruppen, vorzugsweise Arminogruppen, und II) als Bindemittel ein härtbares System umfassend mindestens ein härtbares, wenigstens zwei Epoxid-Endgruppen aufweisendes Polymeres, wenigstens eine Härtekomponente und ggf. ein Beschleuniger sowie IV) ggf. übliche Hilfsstoffe, wobei die härtbare Polymermischung als Zusatzstoff wenigstens 20 Gew.% anorganischer, ggf. multipartikulärer Füllstoffe und als Vermittleradditiv-Komponente weniger als 5 Gew.%, jeweils bezogen auf das Gesamtgewicht der Polymermischung enthält, die Herstellung der Polymermischungen sowie Verwendung für gehärtete Kunststoffformkörper, vorzugsweise für Polymerbeton, in jeglicher Form.

Härtbare Polymermischungen unterschiedlicher Zusammensetzung werden vielfältig verwendet, u. a. auch zur Herstellung von Polymerbeton.

Polymerbetone sind bekannte Materialien, die im Gegensatz zu normalen Beton ein Polymer als Bindemittel aufweisen, das die Gesteinskörnung, die s. g. Zuschlagsstoffe, zusammenhält. Die Zuschlagsstoffe können die unterschiedlichste Gesteinskörnung aufweisen und werden üblicherweise vom Feinstkornbereich bis zur Grobkörnung eingesetzt. Dies erlaubt, je nach Mischung der verschiedenen Korngrößen Füllgrade bis zu 95 Gew.%. Als polymere Bindemittel können unterschiedliche Polymere wie z. B. Epoxyharz-Systeme eingesetzt werden, die nach Aushärtung die Polymermatrix, in der die Zuschlagsstoffe verteilt sind, den Polymerbeton ergeben.

Für die Qualität eines Polymerbetons ist es wichtig, dass er ausgezeichnete mechanische Eigenschaften, wie Biegefestigkeit, Zugfestigkeit, Druckfestigkeit und Schlag-Biege-Festigkeit, neben einem ausreichenden E-Modul aufweist, was nur durch eine sehr gute Wechselwirkung, d. h. Haftung, zwischen der Polymermatrix und den Zuschlagsstoffen, die mit Hilfe der Polymermatrix verbunden werden, zustande kommt.

Je besser diese Wechselwirkung ist, umso höher ist die Güte des Polymerbetons. Dies gilt auch für andere, härtbare Polymermischungen mit insbesondere hohem Füllgrad, die zur Herstellung von Formkörpern oder Formartikeln für weitere Einsatzgebiete hergestellt werden.

Darüber hinaus ist von entscheidender Bedeutung, dass die noch nicht ausgehärtete Polymermischung eine niedrige Viskosität aufweist und hierdurch eine vereinfachte Verarbeitbarkeit ermöglicht wird bzw. die Möglichkeit zur Erhöhung des Füllgrades mit Füllstoffen gegeben ist. Trotz einer niedrigen Viskosität sollte aber auch eine rasche Aushärtung der zu härtenden Polymermischung noch möglich sein.

In verschiedenen Publikationen wird der Einsatz von epoxy- oder aminofunktionellen niedermolekularen Alkoxysilanen zur Verbesserung der Mechanik von gefüllten Epoxidharzen beschrieben, z.B. in J. Appl. Polym. Sci. 2003, 87, 787, in Mat. Res. Soc. Symp. Proc. 2002, 710, 159, in Korea Polym. J. 1997, 5, 160, in J. Appl. Polym. Sci. 1997, 65, 1975, in Polymer Composites 1987, 8, 314, in J. Adhesion 1985, 19, 15, in Polym. Polym. Composites 1999, 7, 177, in Kunststoffe 1978, 68, 65 oder in Adv. Polym. Sci. 1989, 88, 1.

Der Einsatz dieser niedermolekularen Alkoxysilane führt zu einer Freisetzung relativ hoher Alkoholmengen, die bei der Hydrolyse der Alkoxysilangruppen entstehen. Diese Alkohole wie z. B. Methanol oder Ethanol sind nicht nur unerwünschte Nebenprodukte, da sie flüchtige, leicht brennbare Verbindungen sind, sondern stellen auch ein Gesundheitsrisiko dar, wie z. B. Methanol auf Grund seiner Giftigkeit, das beim Einatmen, Verschlucken und bei Berührung mit der Haut und bei anderen Exposition zu irreversiblen Schäden bei Mensch und Tier führt.

Darüber hinaus weisen die bekannten Polymermischungen, insbesondere Polymerbetonmischungen, auf Basis von Epoxid-Harzen für viele Einsatzgebiete nicht die gewünschten vorstehend aufgeführten Verarbeitungseigenschaften bzw. die daraus erhaltenen, gehärteten Polymerartikel, vorzugsweise Polymerbetone, nicht immer die vorstehend aufgeführten mechanischen Eigenschaften in einem zufriedenstellenden Maß auf. Das Dokument EP 0 570 611 A1 offenbart Epoxidharze, die als Polymerbeton verwendet werden. Dort wird eine Zusammensetzung beschrieben, die ein Epoxidharz, verschiedene Härterkomponenten, Quarzmehl, Quarzsand und Wollastonit, Aminosilan enthält, und die als Additiv verwendet wird.

Aufgabe der vorliegenden Erfindung war daher, härtbare Polymermischungen auf Basis von Epoxid-Harzen, vorzugsweise Polymerbetonmischungen, zur Verfügung zu stellen, die eine verbesserte Verarbeitung bei einem deutlich verringerten Umwelt- und Gesundheits-Risiko gewährleisten, wobei sogar die daraus hergestellten gehärteten Polymermassen, vorzugsweise Polymerbetone, gegenüber den vorbekannten Produkten verbesserte mechanische Eigenschaften aufweisen.

Diese Aufgabe wird durch das zur Verfügungstellen der erfindungsgemäßen härtbaren Polymermischungen, vorzugsweise härtbaren Polymerbetonmischungen, gelöst, die
härtbare Polymermischungen umfassend
I) als Vermittleradditiv
   a) wenigstens ein mindestens oligomeres Additionsprodukt von wenigstens einem mindestens eine hydrolysierbare Silangruppe aufweisenden Aminosilan und ggf. Thiosilan oder eine Kombination aus wenigstens einem solchen Aminosilan und/oder Thiosilan und mindestens einem weiteren Monoamin und/oder Polyamin mit mindestens 2 Aminogruppen an mindestens eine wenigstens zwei endständige, ethylenisch ungesättigte Doppelbindungen aufweisenden Verbindung
      und/oder
   b) wenigstens ein mindestens oligomeres Additionsprodukt von wenigstens einem mindestens eine hydrolysierbare Silangruppe aufweisendes Isocyanatsilan und/oder Epoxysilan
      an mindestens eine wenigstens eine endständige Hydroxygruppe und wenigstens eine endständige, ethylenisch ungesättigte Doppelbindung aufweisende Verbindung in Kombination mit wenigstens einem Monoamin und/oder Polyamin mit mindestens 2 Aminogruppen und/oder
   c) wenigstens ein mindestens oligomeres Additionsprodukt
      von wenigstens einem mindestens eine hydrolysierbare Silangruppe und mindestens eine (Meth)acrylat-Gruppe aufweisenden Silan,
      oder wenigstens einem mindestens eine hydrolysierbare Silangruppe und mindestens eine cyclische Dicarbonsäureanhydridgruppe aufweisenden Silan
      an mindestens eine wenigstens zwei endständige Aminogruppen aufweisende Verbindung
      und/oder
   d) wenigstens ein mindestens oligomeres Additionsprodukt
      von wenigstens einem mindestens eine hydrolysierbare Silangruppe aufweisenden Isocyanatsilan und/oder Epoxysilan
      an mindestens eine wenigstens zwei endständige Aminogruppen aufweisende Verbindung ggfs. in Kombination mit mindestens einem weiteren Monoisocyanat und/oder einer Epoxid-Verbindung
      und/oder
   e) wenigstens ein mindestens oligomeres Additionsprodukt
      von wenigstens einem mindestens eine hydrolysierbare Silangruppe aufweisenden Aminosilan und/oder Thiosilan
      an mindestens eine wenigstens zwei endständige Epoxygruppen aufweisende Verbindung,
II) als Bindemittel
   ein härtbares System umfassend mindestens ein wenigstens 2 Epoxid-Endgruppen aufweisendes Polymeres, das zumindest teilweise unter Beteiligung der Epoxidgruppen dieses Polymeren mit den Aminogruppen wenigstens einer der Komponenten I) a)-d) und/oder den Epoxidgruppen der Komponente I) e) härtbar ist, und mindestens eine weitere Härterkomponente und ggf. ein Beschleuniger,
III) als Zuschlagstoffe
   wenigstens 20 Gew.%, bevorzugt wenigstens 40 Gew.%, besonders bevorzugt wenigstens 60 Gew.%, bezogen auf das Gesamtgewicht der Polymermischung, anorganischer, ggfs. multipartikularer Füllstoffe und
IV) ggf. übliche Hilfsstoffe,
   wobei die härtbare Polymermischung weniger als 5 Gew.%, bezogen auf das Gesamtgewicht der Polymermischung, der Vermittleradditiv-Komponente I enthält,
   betrifft.

Durch den Einsatz dieser mindestens oligomeren Additionsprodukte gelingt es, eine verbesserte Verarbeitbarkeit der erfindungsgemäßen Polymermischungen, insbesondere der Polymerbetonmischungen, und gehärteten Produkte wie einen Polymerbeton mit herausragend mechanischen Eigenschaften zu erzielen, wobei gleichzeitig die freigesetzte Menge Alkohol im Vergleich zu den bekannten Systemen deutlich verringert wird. Dies wird durch Stand der Technik weder nahegelegt noch war es zu erwarten.

Als Additionsprodukte enthaltend hydrolysierbare Silangruppen sowie Aminogruppen oder Epoxygruppen werden als Vermittleradditive in den erfindungsgemäßen härtbaren Polymermischungen, vorzugsweise Polymerbetonmischungen vorzugsweise
I a) wenigstens ein mindestens oligomeres Additionsprodukt
   von wenigstens einem mindestens eine hydrolysierbare Silangruppe aufweisenden Aminosilan und ggf. Thiosilan oder
   eine Kombination aus wenigstens einem solchen Aminosilan und/oder Thiosilan und mindestens einem weiteren Monoamin und/oder Polyamin mit mindestens 2 Aminogruppen
   an mindestens eine wenigstens zwei endständige, ethylenisch ungesättigte Doppelbindungen aufweisenden Verbindung
   und/oder
I b) wenigstens ein mindestens oligomeres Additionsprodukt
   von wenigstens einem mindestens eine hydrolysierbare Silangruppe aufweisendes Isocyanatsilan und/oder Epoxysilan
   an mindestens eine wenigstens eine endständige Hydroxygruppe und wenigstens eine endständige, ethylenisch ungesättigte Doppelbindung aufweisende Verbindung in Kombination mit wenigstens einem Monoamin und/oder Polyamin mit mindestens 2 Aminogruppen
   und/oder
I c) wenigstens ein mindestens oligomeres Additionsprodukt
   von wenigstens einem mindestens eine hydrolysierbare Silangruppe und mindestens eine (Meth)acrylat-Gruppe aufweisenden Silan,
   oder wenigstens einem mindestens eine hydrolysierbare Silangruppe und mindestens eine cyclische Dicarbonsäureanhydridgruppe aufweisenden Silan
   an mindestens eine wenigstens zwei endständige Aminogruppen aufweisende Verbindung
   und/oder
I d) wenigstens ein mindestens oligomeres Additionsprodukt
   von wenigstens einem mindestens eine hydrolysierbare Silangruppe aufweisenden Isocyanatsilan und/oder Epoxysilan
   an mindestens eine wenigstens zwei endständige Aminogruppen aufweisende Verbindung ggfs. in Kombination mit mindestens einem weiteren Monoisocyanat und/oder einer Epoxid-Verbindung
   und/oder
I e) wenigstens ein mindestens oligomeres Additionsprodukt
   von wenigstens einem mindestens eine hydrolysierbare Silangruppe aufweisenden Aminosilan und/oder Thiosilan
   an mindestens eine wenigstens zwei endständige Epoxygruppen aufweisende Verbindung,
   eingesetzt.

Als Verbindungen, die wenigstens eine hydrolysierbare Silangruppe aufweisen, kommen vorzugsweise Verbindungen der allgemeinen Formel 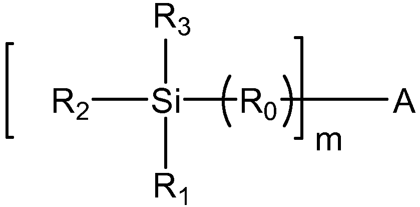 in Frage, in der
- A: für eine Epoxidgruppe, eine Glycidyloxygruppe, eine Isocyanatgruppe, eine-SH Gruppe, eine (Meth)acrylatgruppe, eine cyclische Dicarbonsäureanhydrid-Gruppe oder eine -N(H)-X Gruppe steht, wobei X für Wasserstoff, einen ggf. verzweigten Alkylrest mit 1 bis 6 C-Atomen, einen Arylrest mit 6 bis 10 C-Atomen oder eine Cycloalkylrest mit 4 bis 6 C-Atomen steht und jeder dieser X-Reste mit einer primären oder sekundären Aminogruppe substituiert sein kann, oder A eine -NH-Gruppe bedeutet, wenn m eine ganze Zahl 2 ist,
- R₀: für einen ggf. verzweigten Alkylenrest mit 1 bis 12 C-Atomen, eine Cycloalkylenrest mit 4 bis 6 C-Atomen oder einen Arylenrest mit 6 bis 10 C-Atomen steht,
- R₁: für einen ggf. verzweigten Alkylrest mit 1 bis 7 C-Atomen, bevorzugt 1 bis 3 C-Atomen, ein Halogen, eine -O-C(=O)-R₄ Gruppe oder eine -OR₄ Gruppe steht, wobei R₄ für Wasserstoff, eine Methoxyethylgruppe oder einen ggf. verzweigten Alkylrest mit 1 bis 7 C-Atomen, bevorzugt mit 1 bis 3 C-Atomen, oder einen Cycloalkylrest mit 4 bis 6 C-Atomen steht,
- R₂: für einen ggf. verzweigten Alkylrest mit 1 bis 7 C-Atomen, bevorzugt 1 bis 3 C-Atomen, ein Halogen, eine -O-C(=O)-R₄ Gruppe oder eine -OR₄ Gruppe steht, wobei R₄ für Wasserstoff, eine Methoxyethylgruppe oder einen ggf. verzweigten Alkylrest mit 1 bis 7 C-Atomen, bevorzugt mit 1 bis 3 C-Atomen, oder einen Cycloalkylrest mit 4 bis 6 C-Atomen steht,
- R₃: für eine -O-C(=O)-R₄-Gruppe, ein Halogen oder eine -OR₄-Gruppe steht, wobei R₄ für eine Methoxyethylgruppe oder einen ggf. verzweigten Alkylrest mit 1 bis 7 C-Atomen, bevorzugt mit 1 bis 3 C-Atomen , oder einen Cycloalkylrest mit 4 bis 6 C-Atomen steht,
und
- m: für eine ganze Zahl 1 oder 2 steht.

Vorzugsweise werden als ein wenigstens eine hydrolysierbare Silangruppe aufweisendes Aminosilan wenigstens eine Verbindung ausgewählt aus der Gruppe umfassend 3-(N-Allylamino)propyltrimethoxysilan, 4-Aminobutyltriethoxysilan, 1-Amino-2-(dimethylethoxysilyl)propan,
N-(2-Aminoethyl)-3-aminoisobutyldimethylmethoxysilan,
N-(2-Aminoethyl)-3-aminoisobutylmethyldimethoxysilan,
(Aminoethylaminomethyl)phenethyltrimethoxysilan,
N-(2-Aminoethyl)-3-aminopropylmethyldimethoxysilan,
N-(2-Aminoethyl)-3-aminopropyltriethoxysi lan,
N-(2-Aminoethyl)-3-aminopropyltrimethoxysilan,
N-(6-Aminohexyl)aminomethyltrimethoxysilan,
N-(6-Aminohexyl)aminopropyltrimethoxysilan,
N-(2-Aminoethyl)-11 -aminondecyltrimethoxysilan,
3-(m-Aminophenoxy)propyltrimethoxysilan, m-Aminophenyltrimethoxysilan,
p-Aminophenyltrimethoxysilan,
N-3-[Amino(polypropylenoxy)]aminopropyltrimethoxysilan,
3-Aminopropyldiisopropylethoxysilan, 3-Aminopropyldimethylethoxysilan,
3-Aminopropylmethyldiethoxysilan, 3-Aminopropyltriethoxysilan,
3-Aminopropyltrimethoxysilan, 11-Aminoundecyltriethoxysilan,
3-Aminopropyltricyclohexoxysilan, 3-Aminopropyldicyclohexoxymethylsilan,
3-Aminopropyld icyclohexoxyethylsilan,
N-Methylaminopropyltricyclohexoxysilan,
N-Phenylaminopropyltricyclohexoxysilan,
N-Methylaminopropylmethyldicyclohexoxysilan,
N-Phenylaminopropylmethyldicyclohexoxysilan,
Bis(2-hydroxyethyl)-3-aminopropyltriethoxysilan, Bis(methyldiethoxysilylpropyl)amin,
Bis(triethoxysilylpropyl)amin,
Bis(trimethoxysilylpropyl)amin,
Bis[(3-trimethoxysilyl)propyl]ethylendiamin,
Bis(3-trimethoxysilylpropyl)-N-methylamin,
n-Butyl-3-aminopropyltrimethoxysilan,
t-Butyl-3-aminopropyltrimethoxysilan,
3-(2,4-Dinitrophenylamino)propyltriethoxysilan,
N-Ethylaminoisobutylmethyldiethoxysilan,
N-Ethylaminoisobutyltrimethoxysilan,
N-(3-Methacryloxy-2-hydroxypropyl)-3-aminopropyltriethoxysilan,
N-Methylaminopropylmethyldimethoxysilan,
N-Methylaminopropyltrimethoxysilan, N-Phenylaminomethyltriethoxysilan,
N-Phenylaminomethyltrimethoxysilan,
N-Cyclohexyl-3-aminopropyltrimethoxysilan,
3-(N-Styrylmethyl-2-aminoethylamino)propyltrimethoxysilan,
(3-Trimethoxysilylpropyl)diethylentriam in,
(3-Triethoxysilylpropyl)diethylentriamin,
N-Cyclohexylaminomethylmethyldiethoxysilan,
N-Cyclohexylaminomethyltriethoxysilan,
N-Phenylaminomethyltriethoxysilan, 3-Aminopropyldimethoxymethylsilan, 4-Amino-3,3-dimethylbutyldimethoxymethylsilan,
4-Amino-3,3-Dimethylbutyldimethoxymethylsilan und deren Mischungen eingesetzt.

Als ein wenigstens eine hydrolysierbare Silangruppe aufweisendes Thiosilan kann wenigstens eine Verbindung ausgewählt aus der Gruppe umfassend Mercaptomethylmethyldiethoxysilan, 3-Mercaptopropylmethyldimethoxysilan, 3-Mercaptopropyltriethoxysilan, 3-Mercaptopropyltrimethoxysilan oder deren Mischungen eingesetzt werden.

Als ein wenigstens eine hydrolysierbare Silangruppe aufweisendes Isocyanatsilan kann wenigstens eine Verbindung ausgewählt aus der Gruppe umfassend 3-Isocyanatopropyldimethylchlorsilan, 3-Isocyanatopropyltriethoxysilan, 3-Isocyanatopropyltrimethoxysilan, (Isocyanatomethyl)methyldimethoxysilan oder deren Mischungen eingesetzt werden.

Als ein wenigstens eine hydrolysierbare Silangruppe aufweisendes Säureanhydrid-funktionelles Silan kann wenigstens eine Verbindung ausgewählt aus der Gruppe umfassend 3-(Triethoxysilyl)propylbernsteinsäureanhydrid, 3-(Trimethoxysilyl)propylbernsteinsäureanhydrid, 3-(Triethoxysilyl)propylmaleinsäureanhydrid, 3-(Trimethoxysilyl)propylmaleinsäureanhydrid oder deren Mischungen eingesetzt werden.

Als ein wenigstens eine hydrolysierbare Silangruppe aufweisendes (Meth)acrylsilan kann wenigstens eine Verbindung ausgewählt aus der Gruppe umfassend 3-(Meth)acryloxypropyltrimethoxysilan, 3-(Meth)acryloxypropylmethyldimethoxysilan, 3-(Meth)acryloxypropyltriethoxysilan, 3-(Meth)acryloxypropylmethyldiethoxysilan oder deren Mischungen eingesetzt werden.

Darüber hinaus kann als eine wenigstens eine hydrolysierbare Silangruppe aufweisende Epoxysilan-Verbindung eine Verbindung ausgewählt aus der Gruppe umfassend 2-(3,4-Epoxycyclohexyl)ethyltriethoxysilan, 2-(3,4-Epoxycyclohexyl)ethyltrimethoxysilan, 5,6-Epoxyhexyltriethoxysilan, 5,6-Epoxyhexyltrimethoxysilan, 5,6-Epoxyhexylmethyldimethoxysilan, 5,6-Epoxyhexylmethyldiethoxysilan, 5,6-Epoxyhexyldimethylethoxysilan, 5,6-Epoxyhexyldimethylmethoxysilan, (3-Glycidoxypropyl)dimethylethoxysilan, (3-Glycidoxypropyl)dimethylmethoxysilan, (3-Glycidoxypropyl)methyldiethoxysilan, (3-Glycidoxypropyl)methyldimethoxysilan, (3-Glycidoxypropyl)triethoxysilan, (3-Glycidoxypropyl)trimethoxysilan oder deren Mischungen eingesetzt werden.

Als Amine, die keine hydrolysierbare Silangruppe enthalten und die bei der Herstellung des Vermittleraddetivs I a) optional und der Herstellung des Vermittleraddetivs I b) zwingend zum Einsatz kommen, sind prinzipiell alle Verbindungen geeignet, die mindestens eine primäre oder sekundäre Aminogruppe, vorzugsweise mindestens eine primäre Aminogruppe, aufweisen.

Bevorzugte Amine sind aliphatische Amine vorzugsweise mit C₁-C₂₀, die ggf. mit Hydroxygruppen und/ oder Alkoxygruppen substitutiert sein können, cycloaliphatische Amine mit C₄-C₂₀, die ggf. mit Hydroxygruppen und/oder Alkoxygruppen substituiert sein können, aromatische Amine mit C₆-C₂₄, die gebenenfalls mit Hydroxygruppen und / oder Alkoxygruppen substituiert sein können.

Solche bevorzugte Amine sind Monomethylamin, Monoethylamin, n-Propylamin, Isopropylamin, Butylamin, n-Pentylamin, t-Butylamin, Hexylamin, Octylamin, 2-Ethylhexylamin, Dodecylamin, Tridecylamin, Oleylamin, Dimethylamin, Diethylamin, Dipropylamin, Dibutylamin, Dihexylamin, Bis(2-ethylhexyl)amin, Bis(tridecyl)amin, 3-Methoxypropylamin, 2-Ethoxyethylamin, 3-Ethoxypropylamin, 3-(2-Ethylhexyloxy)propylamin, Cyclopentylamin, Cyclohexylamin, 1-Phenylethylamin, Dicyclohexylamin, Benzylamin, N-Methylbenzylamin, N-Ethylbenzylamin, 2-Phenylethylamin, Anilin, o-Toluidin, 2,6-Xylidin, 1,2-Phenylendiamin, 1,3-Phenylendiamin, 1,4-Phenylendiamin, o-Xylylendiamin, m-Xylylendiamin, p-Xylylendiamin, Ethylendiamin, 1,3-Propandiamin, 1,2-Propandiamin, 1,4-Butandiamin, 1,2-Butandiamin, 1,3-Butandiamin, Neopentandiamin, Hexamethylendiamin, Octamethylendiamin, Isophorondiamin, 4,4'-Diaminodicyclohexylmethan, 3,3'-Dimethyl-4,4'-diaminodicyclohexylmethan, 4,4'-Diaminodiphenylmethan, 4,9-Dioxyadodecan-1,12-diamin, 4,7,10-Trioxatridecan-1,13-diamin, 3-(Methylamino)propylamin, 3-(Cyclohexylamino)propylamin, 3-(Diethylamino)ethylamin, 3-(Dimethylamino)propylamin, 3-(Diethylamino)propylamin, Diethylentriamin, Triethylentetramin, Tetraethylenpentamin, 3-(2-Aminoethyl)aminopropylamin, Dipropylentriamin, N,N-Bis-(3-aminopropyl)methylamin, N,N'-Bis(3-aminopropyl)ethylendiamin, Bis(3-dimethylaminopropyl)amin, N-(3-Aminopropyl)imidazol, Monoethanolamin, 3-Amino-1-propanol, Isopropanolamin, 5-Amino-1-pentanol, 2-(2-Aminoethoxy)ethanol, Aminoethylethanolamin, N-(2-Hydroxyethyl)-1,3-Propandiamin, N-Methylethanolamin, N-Ethylethanolamin, N-Butylethanolamin, Diethanolamin, 3-((2-Hydroxyethyl)amino)-1-propanol, Diisopropanolamin, N-(2-Hydroxyethyl)anilin, 1-Methyl-3-phenylpropylamin, Furfurylamin, N-Isopropylbenzylamin, 1-(1-Naphthyl)ethylamin, N-Benzylethanolamin, 2-(4-Methoxyphenyl)ethylamin, N,N-Dimethylaminoethylamin, Ethoxypropylamin, 2-Methoxyethylamin, 2-Ethoxyethylamin, 2-Cyclohexenylethylamin, Piperidin, Diethylaminopropylamin, 4-Methylcyclohexylamin, Hydroxynovaldiamin, 3-(2-Ethylhexyloxy)propylamin, Tris(2-aminoethyl)amin, N,N'-Di-tert-butylethylendiamin, Tris(hydroxymethyl)aminomethan.

Desweiteren können aminoterminale Polyether eingesetzt werden, bei denen der Polyether auf Basis von einem Alkylenoxid, vorzugsweise Ethylenoxid und/oder Propylenoxid und/oder ggf. weiterer Epoxide (z.B. Butylenoxid, Styroloxid) oder Tetrahydrofuran besteht und die mit Aminogruppen funktionalisiert sind.

Die Verbindungen können je nach Strukturaufbau eine, zwei oder mehr als zwei Aminogruppen tragen. Solche Produkte werden z.B. von der Firma Huntsman unter dem Namen "Jeffamine" oder von der Firma BASF als "Polyetheramin" vertrieben und tragen z.B. die Bezeichnungen M-600, M-1000, M-2005, M-2070, D-230, D-400, D-2000, D-4000, T-403, T-3000, T-5000, Polytetrafuranamin 1700, ED-600, ED-900, ED-2003, HK-511, EDR-148, EDR-176, SD-231, SD-401, SD-2001, ST-404.

Ferner können als Amine dentritische Polyiminstrukturen wie vorzugsweise Polyethylenimine und/oder Polypropylenimine, besonders bevorzugt Polyethylenimine eingesetzt werden. Diese Polyimine können ggf. auch durch partielle Alkoxylierung der Aminofunktionen modifiziert sein.

Als Reaktionspartner für die mindestens eine hydrolysierbare Silangruppe aufweisenden Verbindungen, zur Herstellung der Additionsprodukte I a) bis e) eignen sich zumindest oligomere, vorzugsweise polymere Verbindungen. Diese oligomeren bzw. polymeren Verbindungen mit funktionellen Endgruppen sind vorzugsweise polydispers, d. h. sie weisen keine einheitliche Kettenlänge auf, und werden auch polydispers zur Addition mit den genannten Silanverbindungen eingesetzt.

Diese polydispersen, zumindest oligomeren Verbindungen werden vorzugsweise mit molekular einheitlichen (d. h. monodispersen), hydrolysierbare Silangruppen enthaltenden organischen Verbindungen durch Additionsreaktionen umgesetzt.

Diese Umsetzung zur Herstellung der Vermittleradditive basierend beim Additionsprodukt I a) auf der Addition an vorzugsweise zumindest oligomere Verbindungen, die endständige ethylenisch ungesättigte Doppelbindungen aufweisen, wobei diese endständigen Doppelbindungen Acrylat- und/oder Methacrylatgruppen, bevorzugt Acrylatgruppen sind. An die zumindest oligomere Verbindung werden mindestens ein wenigstens eine hydrolysierbare Silangruppe aufweisendes Aminosilan und ggf. Thiosilan addiert. Bei der Additionsreaktion werden vorzugsweise 5 bis 95 mol%, besonders bevorzugt 10 bis 90 mol%, ganz besonders bevorzugt 15 bis 80 mol% der Doppelbindungen mit den Aminosilanen und ggf. Thiosilanen zur Reaktion gebracht. Gegebenenfalls können vorzugsweise die restlichen 95 bis 5 mol%, besonders bevorzugt 90 bis 10 mol%, ganz besonders bevorzugt 85 bis 20 mol% der Doppelbindungen mit einer weiteren aminischen Komponente, welche keine Silangruppen enthält, zur Reaktion gebracht werden.

Die Herstellung des Vermittleradditives I b) erfolgt vorzugsweise durch Addition an vorzugsweise zumindest oligomere Verbindungen, die wenigstens eine endständige Hydroxygruppe und wenigstens eine endständige, ethylenisch ungesättigte Doppelbindung aufweisen. Bei diesen endständigen Doppelbindungen handelt es sich um Acrylat- und/oder Methacrylatgruppen, bevorzugt um Acrylatgruppen. An die oligomere Verbindung werden ein mindestens eine hydrolysierbare Silangruppe aufweisendes Isocyanatsilan und/oder Epoxysilan sowie mindestens ein weiteres nicht silanfunktionelles Amin addiert.

Die Umsetzung wird vorzugsweise in zwei Schritten durchgeführt, wobei zuerst das Isocyanatsilan und/oder Epoxysilan an die Hydroxygruppen der zumindest oligomeren Verbindung addiert wird und hiernach die endständigen Doppelbindungen mit einem nicht silanfunktionellen Monoamin oder Polyamin zur Reaktion gebracht werden.

Dabei werden die Hydroxyl-gruppen mit Epoxysilanen und / oder einem Isocyanatosilanen vorzugsweise zu mehr als 80 mol%, besonders bevorzugt zu mehr als 90 mol%, ganz besonders bevorzugt zu mehr als 95 mol% umgesetzt und die Doppelbindungen mit einem nicht silanfunktionellen Mono- oder Polyamin zu mehr als 80 mol%, besonders bevorzugt zu mehr als 90 mol%, ganz besonders bevorzugt zu mehr als 95 mol% umgesetzt.

Zur Herstellung des Additionsprodukt I c) erfolgt eine Addition an vorzugsweise zumindest oligomere Verbindungen, die wenigstens zwei endständige Aminogruppen enthalten. Diese Aminogruppen sind bevorzugt primäre und/oder sekundäre, besonders bevorzugt primäre Aminogruppen. An die oligomere Verbindung wird wenigstens ein mindestens eine hydrolysierbare Silangruppe aufweisendes (Meth)acrylsilan oder Säureanhydrid-funktionelles Silan addiert. Bei dieser Addition werden vorzugsweise 5 bis 95 mol%, besonders bevorzugt 10 bis 90 mol%, ganz besonders bevorzugt 15 bis 80 mol% der Aminogruppen mit den (Meth)acrylatsilanen oder Säureanhydrid-funktionellen Silanen zur Reaktion gebracht.
Entsprechend können, bevorzugt 95 bis 5 mol%, besonders bevorzugt 90 bis 10 mol%, ganz besonders bevorzugt 85 bis 20 mol% der Aminogruppen unverändert vorliegen. Sie können in dieser Form belassen oder ggf. gemäß einer dem Fachmann bekannten weiteren Umsetzung modifiziert werden.

Zur Herstellung des Additionsprodukt I d) erfolgt vorzugsweise eine Addition an vorzugsweise zumindest oligomere Verbindungen, die wenigstens zwei endständige Aminogruppen aufweise. Bei den Aminogruppen handelt es sich bevorzugt um primäre und/oder sekundäre, besonders bevorzugt um primäre Aminogruppen. An die oligomere Verbindung werden wenigstens ein wenigstens eine hydrolysierbare Silangruppe aufweisendes Isocyanatsilan und/oder Epoxysilan sowie optional mindestens ein weiteres Monoisocyanat und/oder eine Epoxid Verbindung addiert. Bei dieser Addition werden vorzugsweise 5 bis 95 mol%, besonders bevorzugt 10 bis 90 mol%, ganz besonders bevorzugt 15 bis 80 mol%, der Aminogruppen mit den Isocyanatsilanen und/oder Epoxysilanen zur Reaktion gebracht. Entsprechend liegen vorzugsweise 95 bis 5 mol%, besonders bevorzugt 90 bis 10 mol%, ganz besonders bevorzugt 85 bis 20 mol% der Aminogruppen in unreagierter Form vor. Diese können so belassen bleiben oder ggf. mit einem optional einsetzbaren nicht-silanfunktionellen Isocyanat oder Epoxid weiter umgesetzt werden.

Zur Herstellung des Additionsprodukt I (e) erfolgt vorzugsweise eine Addition an vorzugsweise zumindest oligomere Verbindungen, die wenigstens zwei endständige Epoxygruppen aufweisen. An die oligomere Verbindung werden wenigstens ein wenigstens eine hydrolysierbare Silangruppe aufweisendes Aminosilan und/oder Thiosilan addiert. Bei dieser Addition werden vorzugsweise 5 bis 95 mol%, besonders bevorzugt 10 bis 90 mol%, ganz besonders bevorzugt 15 bis 80 mol% der Aminogruppen mit Aminosilanen zur Reaktion gebracht. Entsprechend liegen vorzugsweise 95 bis 5 mol%, besonders bevorzugt 90 bis 10 mol%, ganz besonders bevorzugt 85 bis 20 mol% der Epoxygruppen in unreagierter Form vor. Sie können so belassen bleiben oder ggf. gemäß einer dem Fachmann bekannten Umsetzung modifiziert werden.

Die entsprechenden Reaktionsbedingungen, die bei den Additionsreaktionen zur Herstellung der Vermittleradditive I a) - e) jeweils einzuhalten sind, sind dem Fachmann bekannt.
Vorzugsweise sind die Verbindungen mit endständigen ethylenisch ungesättigten Doppelbindungen, Hydroxygruppen, Epoxidgruppen und/oder Aminogruppen oligomere Verbindungen mit mindestens 2, besonders bevorzugt polymere Verbindungen mit mindestens 4 wiederkehrenden Struktureinheiten. Bevorzugt wird zumindest eine polymere Verbindung ausgewählt aus der Gruppe umfassend Polyether, Polyester, Polyesterpolyether, Polyamide, Polyesteramide, die entsprechend modifizierte Endgruppen aufweisen. Erfindungsgemäß werden unter Polyester auch Polycarbonate verstanden.

Als Polyether eignen sich Verbindungen mit der wiederkehrenden Struktureinheit

-[-O-W¹-]-

wobei W¹ ein aliphatischer Rest mit 1 bis 15 C-Atomen, bevorzugt mit 2 bis 8 C-Atomen, besonders bevorzugt mit 2 bis 4 C-Atomen, ein aromatischer oder cycloaliphatischer Ring oder eine aromatisch-aliphatische Gruppierung ist. Die Ethergruppierung kann auch Teil eines kettenständigen Ringes sein.

Bevorzugte Polyether sind Polyethylenoxide, Polypropylenoxide, Poly(trimethylen)oxide, Polybutylenoxide, Polystyroloxide, Ethylenoxid/Propylenoxid-Copolyether, Poly(tetrahydrofurane), die ggf. Bisphenol A-Einheiten in der Hauptkette enthalten können, Copolymere von Struktur-Einheiten der genannten Polyether oder Mischungen von wenigstens 2 der genannten Polyethern. Weiterhin können auch Polyether eingesetzt werden, die sich von den sog. Glycidether ableiten und durch Umsetzung von Bisphenolen mit Epichlorhydrin erhalten werden. Besonders bevorzugte Endgruppe modifizierte Polyether leiten sich von Polyethylenoxide, Polypropylenoxide und Polyether aus Ethylenoxid/Propylenoxid ab. Bevorzugt weisen die Polyether ein Molekulargewicht von 100 bis 10000 g/mol, besonders bevorzugt von 150 bis 7500 g/mol, ganz besonders bevorzugt von 200 bis 3000 g/mol auf.

Als Endgruppe modifizierte Polyester eigenen sich bevorzugt entsprechend modifizierte, gesättigte Polyester, d. h. Polyester, die nicht ethylenisch ungesättigt sind, wie Polyester von Lactonen wie z. B. ε-Caprolacton und/oder δ-Valerolacton sowie Polyester, die durch Kondensation von α,ω-Hydroxycarbonsäuren oder durch Kondensation von Dicarbonsäuren mit Diolen erhalten worden sind. Als Säurekomponenten können entweder Dicarbonsäuren, deren Säurehalogenide, Säureanhydride oder Ester eingesetzt werden; insbesondere folgende Dicarbonsäuren sind geeignet: Oxalsäure, Malonsäure, Dimethylmalonsäure, Bernsteinsäure, Glutarsäure, Adipinsäure, Trimethyladipinsäure, Pimelinsäure, 2,2-Dimethylglutarsäure, Azelainsäure, Sebacinsäure, 1,3-Cyclopentandicarbonsäure, 1,2-Cyclohexandicarbonsäure, 1,4-Cyclohexandicarbonsäure, Phthalsäure, Terephtalsäure, Isophthalsäure, 2,5-Norbornandicarbonsäure, 1,4-Naphthalindicarbonsäure, Diphensäure, 4,4'-Oxydibenzoesäure, Diglycolsäure, Thiodipropionsäure, 4,4'-Sulfonyldibenzoesäure, 2,5-Naphthalindicarbonsäure, Tricyclodecandicarbonsäure.

Geeignete Diole zur Umsetzung mit den gesättigten Dicarbonsäuren sind vorzugsweise Ethandiol, 1,2-Propandiol, 1,3-Propandiol, 1,2-Butandiol, 1,4-Butandiol, 1,2-Pentandiol, 1,4-Pentandiol, 2,4-Pentandiol, 1,2-Hexandiol, 1,5-Hexandiol, 1,6-Hexandiol, 2,5-Hexandiol, 1,7-Heptandiol, 1,8-Octandiol, Neopentylglycol.

Besonders bevorzugte zum Einsatz kommende Polyester sind Poly(ε-caprolacton), Poly(δ-valerolacton), Caprolacton/Valerolacton-Copolyester, Polylactid, Polyethylenterephthalat und Polybutylenterephthalat.

Unter Endgruppen modifizierte Polyester werden auch Polycarbonate mit der wiederkehrenden Struktureinheit

-[-W²-O-C(=O)-O-]-

verstanden. Hierbei ist W² ein aliphatischer Rest mit 2 bis 15 C-Atomen, bevorzugt mit 2 bis 12 C-Atomen, besonders bevorzugt mit 2 bis 8 C-Atomen oder ein aromatischer oder cycloaliphatischer Rest oder eine aromatisch-aliphatische Gruppierung, vorzugsweise ein Bisphenol A-Rest oder davon abgeleiteter Rest. Die Carbonatgruppierung kann auch Teil eines kettenständigen Rings sein.

Auch gemischte Polyester der Kohlensäure und anderer Säuren (Polyester-Polycarbonate) sind geeignet. Bevorzugte Polycarbonate sind Bisphenol A-Polycarbonat, Bisphenol F-Polycarbonat, Bisphenol AF-Polycarbonat, Polycarbonate auf Basis von Bisphenol A und Bisphenol TMC sowie auf Basis von 1,6-Hexandiol. Erfindungsgemäß werden unter dem Begriff Polyester auch Polycarbonate oder Copolyestercarbonate verstanden.

Bevorzugte Polyester sind Polyester mit einem Molekulargewicht von 150 bis 15000 g/mol, besonders bevorzugt von 200 bis 7500 g/mol, ganz besonders bevorzugt von 250 bis 3000 g/mol.

Auch Endgruppen-modifizierte Polyamide mit der wiederkehrenden Struktureinheit

-C(=O)-NH-

können zur Herstellung der Vermittleradditive verwendet werden. Als typische Bausteine für Polyamide kommen in Frage: ε-Caprolactam, Aminocapronsäure, Oenatholactam, 7-Aminoheptansäure, 11-Aminoundecansäure, 9-Aminononansäure oder Mischungen davon. Wird das Polyamid durch Polykondensation eines Diamins und einer Dicarbonsäure hergestellt, so können als Diamine vorzugsweise Tetramethylendiamin, Hexamethylendiamin, Nonamethylendiamin, Decamethylendiamin, Undecanmethylendiamin, Dodecamethylendiamin, para-Aminoanilin oder meta-Xylendiamin und als Dicarbonsäure, vorzugsweise Adipinsäure, Sebacinsäure, Dodecandionsäure, Glutarsäure, Terephthalsäure, 2-Methylterephthalsäure, Isophthalsäure, Dimersäure und Naphthalindicarbonsäure eingesetzt werden.

Zusätzlich zu Disäuren oder Diaminen können auch polyfunktionelle Verbindungen, wie Trimellithsäure und Pyromellithsäure, die 3 oder mehr funktionelle Gruppen aufweisen, bis zu 5 mol% mit verwendet werden.

Bevorzugte Polyamide sind solche mit einem Molekulargewicht von 150 bis 15000 g/mol, besonders bevorzugt von 200 bis 7500 g/mol, ganz besonders bevorzugt von 250 bis 3000 g/mol.

Besonderes bevorzugte zum Einsatz kommende Polyamide leiten sich von Nylon 6, Nylon 7, Nylon 8, Nylon 10, Nylon 2, Nylon 66, Nylon 69, Nylon 610, Nylon 611, Nylon 612, Nylon 6T, Nylon 6/66, Nylon 6/12, Nylon 6/6T ab.

Auch Endgruppen modifizierte Polyesteramide mit den vorstehend aufgeführten Struktureinheiten können verwendet werden.

Die aufgeführten Polymere können linear, verzweigt oder sternförmig aufgebaut sein. Der Zugang zu verzweigten oder sternförmigen Polymeren ist durch Einsatz geeigneter multifunktioneller Ausgangsverbindungen möglich.

Besonders bevorzugte oligomere bzw. polymere Verbindungen sind Polyethylenoxide, Polypropylenoxide, Polyether von Ethylenoxid/Propylenoxid sowie Poly(ε-Caprolacton)ester.

Die genannten oligomeren bzw. polymeren Verbindungen mit modifizierten Endgruppen sind vorzugsweise polydispers, d. h. sie weisen keine einheitliche Kettenlänge auf und werden auch polydispers zur Reaktion mit den genannten Silanverbindungen eingesetzt.

Die erfindungsgemäßen härtbaren Polymermischungen, vorzugsweise Polymerbetonmischungen, enthalten weniger als 5 Gew.%, besonders bevorzugt weniger als 1 Gew.%, ganz besonders bevorzugt weniger als 0,5 Gew.%, bezogen auf das Gesamtgewicht der Polymermischung, wenigstens eines der vorstehend beschriebenen Vermittleradditive I a) - e).

Als Bindemittelkomponente II der erfindungsgemäßen, härtbaren Polymermischungen wird vorzugsweise ein härtbares System umfassend wenigstens ein wenigstens zwei Epoxid-Endgruppen aufweisendes Polymeres zusammen mit mindestens einem Härter und ggf. wenigstens einer zusätzlichen mitvernetzenden Komponente eingesetzt.
Das Polymere ist zumindest teilweise unter Beteiligung seiner Epoxidgruppen mit den Aminogruppen von wenigstens einem der Vermittleradditive I a) - d) und/oder der Epoxidgruppen des Vermittleraddetives I e) härtbar.

Das entsprechende Verfahren wird in einschlägigen Monographien beschrieben, wie z.B. in J. Möckel, U. Fuhrmann, Epoxidharze - Schlüsselwerkstoffe für die moderne Technik, Verlag Moderne Industrie, Landsberg/Lech 1996; W. G. Potter, Use of Epoxy Resins, Newnes Butterworth, Sevenoaks 1975; H. Lee, K. Neville, Handbook of Epoxy Resins, McGraw-Hill, New York 1982; C. A. May, Epoxy Resins - Chemistry and Technology, Dekker, New York 1988; B. Ellis, Chemistry and Technology of Epoxy Resins, Blackie Academic & Professional, London 1993; N. Kinjo, M. Ogata, K. Nishi, A. Kaneda, Epoxy Molding Compounds as Encapsulation Materials for Microelectronic Devices, in: Advances in Polymer Science 1989, Vol. 88, S. 1-48; sowie in der in diesen Literaturstellen zitierten Literatur. Die entsprechende Beschreibung wird hiermit als Referenz eingeführt und soll als Teil der Offenbarung der vorliegenden Anmeldung gelten.

Als härtbares Polymeres kommt vorzugsweise ein Epoxid-Endgruppen aufweisendes Polymeres zum Einsatz, das besonders bevorzugt durch Umsetzung von Epichlorhydrin mit mehrwertigen Phenolen, ganz besonders bevorzugt durch Umsetzung mit Bisphenol A und/oder Bisphenol F zu einem Epoxidharz erhältlich ist, sowie auch Mischung dieser entsprechenden Epoxidharze. Zur Herstellung selbstverlöschender Epoxyharze können auch chlorierte und/oder bromierte Derivate eingesetzt werden. Zur Verbesserung von dielektrischen Eigenschaften, der Feuchtigkeitsaufnahme und Dimensionsstabilität können auch Harze, welche Naphthalin-, Stilben-, aromatische Ester-, Biphenyl-, Fluoren-, Cycloaliphaten- oder Adamantanbasierte Reste enthalten, eingesetzt werden, wie sie in J. Appl. Polymer Sci. 2007, 106, 737 und darin zitierter Literatur beschrieben werden. Desweiteren ist auch der Einsatz von Polymeren, die durch Umsetzung von aliphatischen oder alizyklischen Alkoholen mit Epichlorhydrin enthalten werden, möglich.

Epoxid-Harzsysteme können auch zur Erzielung einer verringerten Viskosität und/oder erhöhten Flexibilität aliphatische, cycloaliphatische oder aromatische Verbindungen mit einer oder mehreren Epoxidgruppen enthalten, die als Reaktivverdünner oder reaktive Flexibilisatoren wirken und so bezeichnet werden. Beispiele hierfür sind Butylglycidether, Phenylglycidether, 1,4-Butandioldiglycidether, Kresylglycidether, tert-Butylphenylglycidether, Polyglycerol-triglycidether, Cyclohexandimethanoldiglycidether, Glycerintriglycidether, Neopentylglycoldiglycidether, Pentaerythrittetraglycidether, 2-Ethylhexylglycidether, 1,6-Hexandioldiglycidether, Polypropylenglycoldiglycidether, Polyethylenglycoldiglycidether, Trimethylolpropantriglycidether, Alkylglycidether, Ricinusöltriglycidether, But-2-en-1,4-dioldiglycidether, Tetrahydrophthalsäurediglycidester, Hexahydrophthalsäurediglycidester, Neodekansäureglycidester, Perhydro-Bisphenol A-Diglycidether, Vinylcyclohexen-Diepoxid.

Für die Polymerisation der Bindemittelkomponente II, werden Härter miteingesetzt. Als Härter eignen sich Polyamine, Carbonsäureanhydride, Carbonsäuren, Polyphenole, Aminoharze, Phenolharze, katalytisch härtende Verbindungen (z.B. Ferrocene, Triarylsulfonium-Verbindungen), bevorzugt Polyamine oder Carbonsäureanhydride, wie sie z.B. in Stoye/Freitag, "Lackharze: Chemie, Eigenschaften und Anwendungen", Verlag Hanser Fachbuch, oder in DE 10 2005 046 641 A1, oder im Katalog "UPPC Lieferprogramm: Epoxidharzhärter, Epoxidharze, Glycidether" der Firma UPPC AG, 88487 Mietringen-Baltringen aufgeführt sind. Die entsprechende Offenbarung wird hiermit als Offenbarung der vorliegenden Anmeldung eingeführt.

Als Härterkomponente kann auch eine halogenierte Verbindung eingesetzt werden, die zur Bildung schwer entflammbarer Formstoffe führt. Beispiele hierfür sind chlorierte oder bromierte cyclische Säureanhydride.

Beispiele für Aminogruppen aufweisende Härterkomponenten sind aliphatische, cycloaliphatische, araliphatische di- und/oder polyfunktionelle Amine. Hierzu zählen unter anderem primäre, aliphatische Polyamine, (z.B. Ethylendiamin, Diethylentriamin, Triethylentetramin, Tetraethylenpentamin, Pentaethylenhexamin und Homologe, 1,3-Pentandiamin, Propylendiamin, Hexamethylendiamin, Dipropylentriamin, Polyoxyethylenpolyamine, Polyoxypropylenpolyamine, Polytetrahydrofuranpolyamine, modifizierte aliphatische Amine (beispielsweise Mannich-Basen oder durch Reaktion von primären Aminen mit Glycidethern oder Carbonsäuren, bevorzugt Fettsäuren, hergestellte Amine), hydroxylierte primäre Amine, cycloaliphatische Amine wie z.B. Isophorondiamin, Diaminocyclohexan, N-Aminoethylpiperazin, Tricyclodecantriamin, aromatische Polyamine wie z.B. Phenylendiamine, Methylendianilin, Diaminodiphenylmethan, Diaminodiphenylsulfon, oralyphatische Amine wie z.B. Xylylendiamin.

Beispielsweise können als Härter auch Carbonsäureanhydride wie Orthophthalsäureanhydrid, Hexahydrophthalsäureanhydrid, Methyltetrahydrophthalsäureanhydrid eingesetzt werden.

Je nach Härtungsbedingungen kann ggf. ein üblicher Beschleuniger mit eingesetzt werden, damit die Reaktion und Aushärtung der Bindemittelkomponente II, bereits bei niedrigeren Temperaturen und/oder bei deutlich kürzerer Härtungszeit erfolgen kann. Übliche Beschleuniger sind phenolische Verbindungen oder tertiäre Amine, wie z.B. Triethylamin, Tridimethylaminomethylphenol, Dimethylaminomethylphenol, Diethylentriaminomethylphenol, Benzyldimethylamin, Dimethylanilin, Diethylanilin, Dimethyl-p-toluidine. Sie werden bevorzugt in Kombination mit Carbonsäureanhydrid-Härtern eingesetzt.

Eine Aushärtung von Epoxidharzen der Bindemittelkomponente II, kann optional auch in Kombination mit Isocyanatharzen, ggf. auch mit blockierten Isocyanaten erfolgen.

Typische Epoxid-Harze, Härter und Beschleuniger sowie deren Einsatzbedingungen ggf. im kombinierten Einsatz mit weiteren Zusatzstoffen werden in der einschlägigen Literatur beschrieben wie z.B. in Stoye/Freitag, "Lackharze: Chemie, Eigenschaften und Anwendungen", Verlag Hanser Fachbuch, oder in "Technische Information: Oberflächenschutz", Bände 1 und 2, herausgegeben von Witco GmbH, Bergkamen sowie der darin aufgelisteten Literatur. Die entsprechende Offenbarung wird hiermit als Referenz eingeführt und gilt als Teil der Offenbarung der vorliegenden Anmeldung.

Je nach Härtersystem kann es zudem vorzugsweise erforderlich sein, die Härtung bei erhöhter Temperatur durchzuführen. Dem Fachmann ist bekannt, welcher Temperaturbereich in Abhängigkeit vom jeweiligen Härter zu wählen ist, wobei die Temperatur in weiten Bereichen schwanken kann, so dass z.B. Härtungen bei 50 °C bis 150°C möglich sind. Ein externer Energieeintrag kann auf verschiedenen Wegen erfolgen, so z. B. unter anderem durch Erwärmen in einem Ofen bzw. durch geeignete Bestrahlung jeweils ggf. auch in Kombination mit einer Druckaufbringung.

Die jeweils zum Einsatz kommenden Mengen eines Härters und eines ggf. vorhandenen Beschleunigersystems sind dem Fachmann bekannt.

Vorzugsweise kann die Bindemittel-Komponente ii) in einer Menge kleiner 80 Gew.%, bevorzugt kleiner 60 Gew.%, besonders bevorzugt kleiner 40 Gew.%, bezogen auf das Gesamtgewicht der Polymermischung, vorliegen.

Darüber hinaus ist die erfindungsgemäße härtbare Polymermischung, vorzugsweise Polymerbetonmischung, mit wenigstens 20 Gew.%, bevorzugt wenigstens 40 Gew.%, besonders bevorzugt 60 Gew.%, insbesondere bis zu 95 Gew.%, bezogen auf das Gesamtgewicht der Polymermischung, mit anorganischen Füllstoffen in jeder Form als Zuschlagsstoffe ausgerüstet. Diese Füllstoffe können ggf. in den Matrixmaterialien verteilt werden, wenn sie multipartikulär oder faserförmig sind und sich darin nicht lösen. Eine Aufzählung über mögliche Füllstoffe wird in E. Brandau, "Duroplastwerkstoffe", VCH Verlagsgesellschaft, Weinheim 1993 sowie die in R. Burns, "Polyester Molding Compounds", Marcel Dekker Inc., New York 1982 und auch die in J. H. Aurer, A. Kasper, "Unsaturated Polyester Resins", Verlag Moderne Industrie, Landsberg/Lech 2003 gegeben. Als ggf. verteilbare anorganische Füllstoffe werden vorzugsweise anorganische, siliziumhaltige Verbindungen, beispielsweise Quartz, Cristobalit, pyrogene Kieselsäuren, gefällte Kieselsäuren, Wollastonit, Kaolin, Glimmer, Borosilicate, Bariumalumosilicate, Glaspulver, Titansilicate, Zirkonsilicate, Montmorillonit, Talk, vorzugsweise als Gesteinskörnungen in allen Kornbereichen, d. h. von Feinstkornbereich bis zu einer groben Gesteinskörnung, siliziumhaltige Verbindungen in jeder Form, vorzugsweise als lose oder gebundene, geschnittene oder endlose Fasern, wie z. B. Gelege oder Gewebe, sowie sonstige sauerstoffhaltige anorganische Verbindungen von Magnesium, Calcium, Barium wie Bariumsulfat, Calciumcarbonat u. a. auch als Marmorkörnung, Gips, Magnesiumhydroxid und/oder anorganische Aluminiumverbindungen, vorzugsweise Aluminiumhydroxid, Aluminiumoxide (z. B. Korund) und Aluminiumoxidhydroxide eingesetzt. Besonders bevorzugt werden siliziumhaltige Verbindungen verwendet.

Besonders bevorzugte Form der Füllstoffe sind körnige oder pulverförmige Füllstoffe oder Gelege oder Gewebe aus Fasern, ggf. Gemische aus beiden Formen der Füllstoffe. Die Korngrößenbereiche sind vorzugsweise 1 µm bis 5 cm, besonders bevorzugt 10 µm bis 2 cm, ganz besonders bevorzugt 100 µm bis 2 cm gemessen als Durchmesser.

Wie bereits erwähnt, liegen die Füllstoffe der erfindungsgemäßen Poymermischungen, insbesondere aus oxidische Siliciumverbindungen, ggf. als kontinuierliche Gebilde, wie z. B. in Faserform vor, wobei die Fasern auch in Form von Strängen, Matten, Geweben und/oder Gelegen vorliegen können. Gegebenenfalls können dabei die nachstehend genannten Füllstoffe in multipartikulärer Form mitverwendet werden.

Darüber hinaus kann die erfindungsgemäß härtbare Polymermischung, wenn notwendig, als Hilfsstoffe IV) Verarbeitungsadditive wie Trennmittel und Antischaummittel, Entlüfter, Inhibitoren, Stabilisatoren wie Antioxidantien, Lichtschutzmittel, Wärmestabilisatoren und Flammschutzmittel, Modifikatoren wie Benetzungsmittel, Weichmacher, Verdicker, Thixotropiermittel, Schlagzähmacher und Zusatzstoffe zur Verringerung der Brüchigkeit (sog. "Toughener", vgl. hierzu Polymer 2000, 41, 3425 und Macromolecules 1999, 32, 8524), Blähmittel und/oder Oberflächenmodifikatoren wie Antistatika, Hydrophobierungsmittel, Hydrophilierungsmittel, Zusatzstoffe zur Verbesserung der Bioabbaubarkeit (vgl. hierzu Journal of Applied Polymer Science 2007, 106, 684), Pigmente, Netz- und Dispergiermittel enthalten. Die Auswahl der entsprechenden Additive erfolgt in bekannter Weise nach dem endgültigen Einsatzzweck.

Die erfindungsgemäße Polymermischungen, vorzugsweise Polymerbetonmischungen werden in bekannte Weise hergestellt, indem man die genannten Komponenten der Mischung in üblichen Mischeinheiten zusammenbringt, wobei vorzugsweise das Vermittleradditiv I unmittelbar von Verarbeitung und Aushärtung der Polymermischung zugesetzt oder der Füllstoff zumindest mit einem Teil des Vermittleradditiv I vorbehandelt und dann mit den weiteren Komponenten der Polymerbetonmischung zusammengebracht wird.

Durch den Einsatz wenigstens einem der erfindungsgemäß zum Einsatz kommenden Vermittleradditive I a) - e), wie sie vorstehend erläutert sind, und das aufgeführte Bindemittelsystem II, gelingt es, Polymermischungen, vorzugsweise Polymerbetonmischungen, zur Verfügung zu stellen, die nicht nur eine bessere Handhabung aufgrund ihrer niedrigeren Viskosität aufweisen, sondern auch Kunststoffprodukte wie Formkörper oder Polymerbetone in jeder Gestalt, die ausgezeichnete mechanische Eigenschaften aufweisen und zu einer geringen Umwelt- und Gesundheitsbelastung führen, herzustellen.

Ein weiterer Gegenstand der vorliegenden Erfindung ist daher auch die Verwendung der vorstehend beschriebenen Additionsprodukte I a) - I e) als Vermittleradditiv I in härtbaren Polymermischungen, vorzugsweise Polymerbetonmischungen, basierend auf einem durch Reaktion von Epoxidgruppen mit Aminogruppen härtbaren System als Bindemittelkomponente II, die mit mindestens 20 Gew.%, besonders bevorzugt mindestens 40 Gew.%, ganz besonders bevorzugt mindestens 60 Gew.%, bezogen auf das Gesamtgewicht der Polymermischung, mit ggf. verteilbaren, anorganischen Füllstoffen als Zuschlagsstoffe III ausgestattet sind und ggf. übliche Hilfsstoffe IV enthalten.

Ein weiterer Gegenstand der vorliegenden Erfindung ist auch die Verwendung von wenigstens einem Additionsprodukt I a) - I e) als Vermittleradditiv I in härtbaren Polymermischungen, vorzugsweise Polymerbetonmischungen, basierend auf einem durch Reaktion von Epoxidgruppen und Aminogruppen härtbarem System als Bindemittel II, die mit 20 Gew.%, besonders bevorzugt mindestens 30 Gew.%, ganz besonders bevorzugt mindestens 50 Gew.%, bezogen auf das Gesamtgewicht der Polymermischung, mit kontinuierlichen, faserförmigen, anorganischen Füllstoffe als Zuschlagsstoffe III und ggf. üblicher Hilfsstoffe IV ausgestattet sind.

Diese so erhaltenen Polymermischungen können in an sich bekannter Weise ausgehärtet werden, wie in G. Kannebley et al., "AVK-TV Handbuch", Band I und II, Frankfurt 2004 und Stoye/Freitag, "Lackharze: Chemie, Eigenschaften und Anwendungen", Verlag Hanser Fachbuch sowie in J. Möckel/U. Fuhrmann, "Epoxidharze - Schlüsselwerkstoffe für die moderne Technik", Bibiliothek der Technik Bd. 51, Verlag Moderne Industrie, Landsberg/Lech 1996 beschrieben.

Die entsprechende Beschreibung wird hiermit als Teil der Offenbarung der vorliegenden Anmeldung eingeführt.

Der Aushärtungsprozess wird vom verwendeten Polymer-System, der Reaktivität des Härters, der optionalen Mitverwendung eines Beschleunigers, der Aushärtezeit, der Temperatur und der Masse des auszuhärtenden Systems bestimmt. Die Aushärtung kann ohne Zufuhr von thermischer Energie bei Raumtemperatur als Starttemperatur geschehen oder, wie vorstehend beschrieben, bei erhöhter Temperatur.

Aus den erfindungsgemäßen Polymermischungen, vorzugsweise Polymerbetonmischungen können vorzugsweise Kunststoffformkörper, bzw. Polymerbetone in jeder Gestaltung erzeugt werden, die zum Beispiel im Bauwesen, im Rohrleitungsbau, Apparatebau, Werkzeugbau, Waffentechnik, Schiffbau, Waggonbau, Automobilbau oder in der Luft- und Raumfahrt eingesetzt werden. Konkrete Beispiele sind Formkörper wie Rohre, Rinnen, Schächte, Verbindungsstücke, Segmentbauteile, Platten, Fliesen, Böden, Bodenbeläge, Auskleidungen, Wände, Decken, Kunstmarmor, Rahmen, unterschiedlichste Behältnisse (z. B. für Zu- und Abwasser), Dekorationsartikel, Spülen, Becken, Wannen, Tröge, sonstige Behälter. Weitere Einsatzbereiche sind die Erzeugung von Betonbeschichtungen, Betonsanierungen, Korrosionsschutz, Elektrotechnik, Elektronik. Die erfindungsgemäßen Polymermischungen, bevorzugt Polymerbetonmischungen, können sowohl in Gebäuden als auch im Freien sowie im Erdreich zur Herstellung von Polymerbetonkörpern, bevorzugt Polymerbetonformkörpern eingesetzt werden. Entsprechende Formkörper werden zum Beispiel in Wohnräumen, im Bürobereich, im Ladenbau, im Sanitärbereich, in Küchen, in Friseursalons, in Arztpraxen, in Krankenhäuser, in Flughäfen, bei Windrädern, in Laboratorien, in der Gastronomie oder in der Landwirtschaft eingesetzt. Die beschriebenen härtbaren Polymermischungen können desweiteren in Anwendungen der Bereiche Elektronik, Elektrotechnik, Klebstoffe, Verbundwerkstoffe, Vergussmassen, Fertigungsmittel und Werkzeuge zum Einsatz kommen. So ist eine Anwendung z.B. auch im Bereich der Verkapselung von Mikroelektronik-Bauteilen sowie der Beschichtung und Laminierung von Leiterplatten möglich.

### Beispiele:

In den Beispielen werden folgende Polymere eingesetzt:

| *Name* | *Beschreibung des Oligomers bzw. Polymers* |
|---|---|
| Diamin A | Difunktionelles NH₂-terminales Polypropylenglycol mit einem Molekulargewicht von ca. 430, durchschnittlich 6,1 Einheiten Propylenoxid) |
| Diamin B | Difunktionelles NH₂-terminaler Polyether mit einem Molekulargewicht von ca. 600 (durchschnittlich 9 Einheiten Ethylenoxid und 3,6 Einheiten Propylenoxid) |
| Triamin C | Trimethylolpropan-gestartetes trifunktionelles NH₂-terminales Polypropylenglycol (durchschnittlich 5-6 Einheiten Propylenoxid) |
| Diacrylat D | Polyethylenglycol-200-Diacrylat |
| Monoacrylat E | OH-terminales Polyester-Monoacrylat (Polyester auf Basis von ε-Caprolacton, Mₙ=590, PDI=1,35) |
| Diepoxid F | Polypropylenglycol-Diglycidether mit 4-6 Einheiten Propylenglycol |
| Diacrylat G | Diacrylat des ethoxylierten Bisphenol A mit 4 Einheiten Ethylenoxid |

### I Herstellung der Vermittleradditive

Die Herstellung der Vermittleradditive kann ggf. in einem organischen Lösungsmittel erfolgen. In den folgenden Angaben steht die Abkürzung GPC für Gelpermeationschromatographie, NMR steht für kernmagnetische Resonanzspektroskopie, Mₙ steht für das zahlenmittlere Molekulargewicht, PDI steht für die Polydispersität (d.h. den Quotienten M_{w}/Mₙ aus gewichtsmittlerem und zahlenmittlerem Molekulargewicht). Dowanol PMA ist 1-Methoxy-2-propylacetat. Vermittleradditiv 1:

20,00 g des polymeren Diamins A und 9,55 g 3-Isocyanatopropyltrimethoxysilan werden in einem verschließbaren Schraubdeckelglas mit Magnetrührkern bei Raumtemperatur 3 h lang gerührt. Produkt: Die Isocyanatgruppen wurden komplett umgesetzt (bestimmt durch ¹³C-NMR-Spektroskopie).

### Vermittleradditiv 2:

23,15 g Aminoethylethanolamin, 71,80 g Dowanol PMA und 24,60 g 3-Aminopropyltriethoxysilan werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 20 min werden 60,00 g des polymeren Diacrylats D (Mₙ=400, PDI=1,12) zugetropft, wobei die Temperatur 28°C nicht übersteigt. Man rührt 6 h. Produkt: Mₙ=670, PDI=1,72, keine Acrylat-Gruppen mehr nachweisbar (mittels ¹H-NMR-Spektroskopie). Das erhaltene Vermittleradditiv ist eine 60%-ige Lösung der Wirksubstanz in Dowanol PMA.

### Vermittleradditiv 3:

50,00 g des polymeren Triamins C werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Das Reaktionsgemisch wird auf 85°C erwärmt. Innerhalb von 15 min werden 43,8 g 3-Glycidyloxypropyltriethoxysilan zugegeben. Man rührt noch 4 h bei 85°C weiter, hiernach beträgt das Verhältnis von Silan- zu Epoxy-Gruppen 1 : 0,08 (bestimmt mittels ¹H-NMR-Spektroskopie), d.h. die Epoxid-Gruppen sind bereits zu 92% umgesetzt. Nach weiteren 4 h bei 85°C sind die Epoxy-Gruppen vollständig umgesetzt, so dass ihr Resonanzsignal im Vergleich zu dem der Silan-Gruppen nicht mehr integrierbar ist.

### Vermittleradditiv 4:

60,00 g des polymeren Diacrylats D (Mₙ=400, PDI=1,12) und 72,00 g Dowanol PMA werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 15 min werden 24,60 g 3-Aminopropyltriethoxysilan zugetropft. Anschließend werden 23,15 g Aminoethylethanolamin in 15 min zugetropft, wobei die Temperatur 38°C nicht übersteigt. Man rührt 6 h. Produkt: Mₙ=630, PDI=1,73, keine Acrylat-Gruppen mehr nachweisbar (mittels ¹H-NMR-Spektroskopie). Das erhaltene Vermittleradditiv ist eine 60%-ige Lösung der Wirksubstanz in Dowanol PMA.

### Vermittleradditiv 5:

24,49 g 3-Methylaminopropylamin und 49,20 g 3-Aminopropyltriethoxysilan werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 45 min werden 90,00 g des polymeren Diacrylats D zugetropft, wobei die Temperatur 30°C nicht übersteigt. Man rührt weitere 7 h. Produkt: Mₙ=730, PDI=1,85, die Acrylat-Gruppen wurden vollständig umgesetzt (bestimmt über ¹H-NMR-Spektroskopie).

### Vermittleradditiv 6:

12,24 g 3-Methylaminopropylamin, 122,77 g Dowanol PMA und 24,60 g 3-Aminopropyltriethoxysilan werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 35 min werden 45,00 g des polymeren Diacrylats D zugetropft, wobei die Temperatur 28°C nicht übersteigt. Man rührt weitere 8 h. Produkt: Mₙ= 540, PDI=1,58, die Acrylat-Gruppen wurden vollständig umgesetzt (bestimmt über ¹H-NMR-Spektroskopie). Das erhaltene Vermittler-additiv ist eine 40%-ige Lösung der Wirksubstanz in Dowanol PMA.

### Vermittleradditiv 7:

3,53 g 3-Methylaminopropylamin, 100,38 g Dowanol PMA und 30,99 g 3-Aminopropyltriethoxysilan werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 35 min werden 32,40 g des polymeren Diacrylats D zugetropft, wobei die Temperatur 45°C nicht übersteigt. Man rührt weitere 6 h. Produkt: Mₙ=1340, PDI=1,79, die Acrylat-Gruppen wurden vollständig umgesetzt (bestimmt über ¹H-NMR-Spektroskopie). Das erhaltene Vermittler-additiv ist eine 40%-ige Lösung der Wirksubstanz in Dowanol PMA.

### Vermittleradditiv 8:

11,70 g 3-Methylaminopropylamin, 74,20 g Dowanol PMA und 29,50 g 3-Aminopropyltriethoxysilan werden in einem Rundkolben mit Rückflusskühler, Gaseinlass, Temperaturfühler, Tropftrichter und KPG-Rührer vorgelegt und auf 40°C erhitzt. Die Reaktion wird unter Stickstoff-Strom durchgeführt. Innerhalb von 20 min werden 54,00 g des polymeren Diacrylats D zugetropft, wobei die Temperatur 42°C nicht übersteigt. Man rührt 30 min. Im Anschluss werden 3,74 g Lupasol G20 (wasserfreies Polyethylenimin der Fa. BASF mit einer molaren Masse von ca. 1300 g/mol), gelöst in 74,20 g Dowanol PMA, zugegeben und weitere 6 h gerührt. Produkt: Mₙ= 910, PDI= 1,84, die Acrylat-Gruppen wurden vollständig umgesetzt (bestimmt über ¹H-NMR-Spektroskopie). Das erhaltene Vermittleradditiv ist eine 40%-ige Lösung der Wirksubstanz in Dowanol PMA.

### Vermittleradditiv 9:

12,25 g 3-Methylaminopropylamin, 115,76 g Dowanol PMA und 19,92 g 3-Aminopropyltrimethoxysilan werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 10 min werden 45,00 g des polymeren Diacrylats D zugetropft, wobei die Temperatur 45°C nicht übersteigt. Man rührt weitere 6 h. Produkt: Mₙ=860, PDI=2,04, die Acrylat-Gruppen wurden vollständig umgesetzt (bestimmt über ¹H-NMR-Spektroskopie). Das erhaltene Vermittler-additiv ist eine 40%-ige Lösung der Wirksubstanz in Dowanol PMA.

### Vermittleradditiv 10:

50,00 g des polymeren Diacrylats D und 120,00 g Dowanol PMA werden in einem Rundkolben mit Rückflusskühler, Gaseinlass, Temperaturfühler, Tropftrichter und KPG-Rührer vorgelegt und auf 50°C erhitzt. Die Reaktion wird unter Stickstoff-Strom durchgeführt. Innerhalb von 10 min werden 11,05 g 3-Aminopropyltrimethoxysilan zugetropft. Man rührt 30 min bei 50°C. Anschließend werden 19,01 g 3-Methylaminopropylamin innerhalb von 15 min zugetropft. Man rührt noch 1 h bei 50°C. Produkt: Mₙ= 600, PDI= 1,54, die Acrylat-Gruppen wurden vollständig umgesetzt (bestimmt über ¹H-NMR-Spektroskopie). Das erhaltene Vermittleradditiv ist eine 40%-ige Lösung der Wirksubstanz in Dowanol PMA.

### Vermittleradditiv 11:

11,70 g 3-Methylaminopropylamin, 70,00 g Dowanol PMA und 23,90 g 3-Aminopropyltrimethoxysilan werden in einem Rundkolben mit Rückflusskühler, Gaseinlass, Temperaturfühler, Tropftrichter und KPG-Rührer vorgelegt und auf 40°C erhitzt. Die Reaktion wird unter Stickstoff-Strom durchgeführt. Innerhalb von 20 min werden 54,00 g des polymeren Diacrylats D zugetropft, wobei die Temperatur 45°C nicht übersteigt. Man rührt 30 min. Im Anschluss werden 3,74 g Lupasol G20 (wasserfrei, Fa. BASF), gelöst in 70 g Dowanol PMA, zugegeben und weitere 6 h gerührt. ¹H-NMR-Spektrum: Im Produkt sind die Acrylat-Gruppen vollständig umgesetzt. Das erhaltene Vermittleradditiv ist eine 40%-ige Lösung der Wirksubstanz in Dowanol PMA.

### Vermittleradditiv 12:

11,10 g 3-Methylaminopropylamin, 120,20 g Dowanol PMA und 15,03 g 3-Aminopropyltrimethoxysilan werden in einem Rundkolben mit Rückflusskühler, Gaseinlass, Temperaturfühler, Tropftrichter und KPG-Rührer vorgelegt und auf 40°C erhitzt. Die Reaktion wird unter Stickstoff-Strom durchgeführt. Innerhalb von 20 min werden 54,00 g des polymeren Diacrylats G zugetropft, wobei die Temperatur 43°C nicht übersteigt. Im Anschluss wird weitere 6 h gerührt. Produkt: Mₙ= 960, PDI= 1,69, die Acrylat-Gruppen wurden vollständig umgesetzt (bestimmt über ¹H-NMR-Spektroskopie). Das erhaltene Vermittleradditiv ist eine 40%-ige Lösung der Wirksubstanz in Dowanol PMA.

### Vermittleradditiv 13:

10,00 g des polymeren Diamins A und 5,08 g 3-Acryloxypropylmethyldimethoxysilan werden in einem verschließbaren Schraubdeckelglas mit Magnetrührkern gemischt und 6 h gerührt. Produkt: keine Acrylat-Gruppen mehr nachweisbar (mittels ¹H-NMR-Spektroskopie).

### Vermittleradditiv 14:

10,00 g des polymeren Triamins C und 7,43 g 3-Acryloxypropylmethyldimethoxysilan werden in einem verschließbaren Schraubdeckelglas mit Magnetrührkern gemischt und 6 h gerührt. Produkt: keine Acrylat-Gruppen mehr nachweisbar (mittels ¹H-NMR-Spektroskopie; GPC: Mₙ=1000, PDI=1,61).

### Vermittleradditiv 15:

10,00 g des polymeren Diamins B und 3,64 g 3-Acryloxypropylmethyldimethoxysilan werden in einem verschließbaren Schraubdeckelglas mit Magnetrührkern gemischt und 6 h gerührt. Produkt: keine Acrylat-Gruppen mehr nachweisbar (mittels ¹H-NMR-Spektroskopie; GPC: Mₙ=1000, PDI=1,30).

### Vermittleradditiv 16:

4,00 g des polymeren Diamins B und 24,04 g N-Ethylpyrrolidon werden in einem verschließbaren Schraubdeckelglas mit Magnetrührkern vorgelegt. 2,01 g 3-(Triethoxysilyl)propylbernsteinsäureanhydrid werden zugetropft und das Reaktionsgemisch wird 7 h gerührt. Mittels LC/MS kann das Einfach-Additionsprodukt nachgewiesen werden, es sind keine Signale des nicht-umgesetzten Diamins B mehr vorhanden.

### Vermittleradditiv 17:

4,00 g des polymeren Triamins C und 26,20 g N-Ethylpyrrolidon werden in einem verschließbaren Schraubdeckelglas mit Magnetrührkern vorgelegt. 2,55 g 3-(Triethoxysilyl)propylbernsteinsäureanhydrid werden zugetropft und das Reaktionsgemisch wird 6 h gerührt. Mittels LC/MS können das Einfach- und Zweifach-Additionsprodukt nachgewiesen werden, es sind keine Signale des nicht-umgesetzten Triamins C mehr vorhanden.

### Vermittleradditiv 18:

20,00 g des polymeren Diepoxids F, 9,14 g 3-Mercaptopropyltrimethoxysilan und 0,15 g Triethylamin werden in einem verschließbaren Schraubdeckelglas mit Magnetrührkern bei Raumtemperatur 8 h lang gerührt. Produkt: Das Verhältnis von Silan-Gruppen zu Epoxid-Gruppen beträgt gemäß NMR-Spektroskopie 1 : 1,1 (Edukte: 1 : 2, Theorie nach vollständiger Umsetzung: 1 : 1).

### Vermittleradditiv 19:

20,00 g des polymeren Diamins A und 11,51 g 3-Isocyanatopropyltriethoxysilan werden in einem verschließbaren Schraubdeckelglas mit Magnetrührkern bei Raumtemperatur 3 h lang gerührt. Produkt: Die Isocyanatgruppen wurden komplett umgesetzt (bestimmt durch ¹³C-NMR-Spektroskopie).

### Vermittleradditiv 20:

20,00 g des polymeren Triamins C und 8,6 g 3-Isocyanatopropyltrimethoxysilan werden in einem verschließbaren Schraubdeckelglas mit Magnetrührkern bei Raumtemperatur 3 h lang gerührt. Produkt: Die Isocyanatgruppen wurden komplett umgesetzt (bestimmt durch ¹³C-NMR-Spektroskopie; GPC: Mₙ=700, PDI=7,27).

### Vermittleradditiv 21:

65,80 g 3-Methylaminopropylamin, 705,40 g Dowanol PMA und 134,45 g 3-Aminopropyltrimethoxysilan werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 40 min werden 270,00 g des polymeren Diacrylats D zugetropft, wobei die Temperatur 33°C nicht übersteigt. Man rührt weitere 6 h. Produkt: Mₙ=530, PDI=1,57, die Acrylat-Gruppen wurden vollständig umgesetzt (bestimmt über ¹H-NMR-Spektroskopie). Das erhaltene Vermittler-additiv ist eine 40%-ige Lösung der Wirksubstanz in Dowanol PMA.

### Vermittleradditiv 22:

58,50 g 3-Methylaminopropylamin, 595,00 g Dowanol PMA und 119,50 g 3-Aminopropyltrimethoxysilan werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 40 min werden 270,00 g des polymeren Diacrylats D zugetropft, wobei die Temperatur 33°C nicht übersteigt. Nach Zugabe wird das Reaktionsgemisch noch 30 min gerührt. Hiernach werden 15,50 g Epomin SP-003 (wasserfreies Polyethylenimin der Fa. Sumitomo, Japan mit einer molaren Masse von ca. 300 g/mol), gelöst in 100,00 g Dowanol PMA, über einen Zeitraum von 15 min zudosiert. Man rührt weitere 6 h. Produkt: Mₙ=510, PDI=1,55, die Acrylat-Gruppen wurden vollständig umgesetzt (bestimmt über ¹H-NMR-Spektroskopie). Das erhaltene Vermittleradditiv ist eine 40%-ige Lösung der Wirksubstanz in Dowanol PMA.

### Vermittleradditiv 23:

50,00 g des polymeren Monoacrylats E und 0,78 g Dibutylzinndilaurat-Lösung (1% in Xylol) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Das Reaktionsgemisch wird auf 80°C erwärmt. Innerhalb von 5 min werden 27,90 g 3-Isocyanatopropyltrimethoxysilan zugetropft, wobei die Temperatur auf 98°C ansteigt. Durch Kühlung wird die Temperatur wieder auf 80°C gesenkt. Man rührt noch 2,5 h bei 80°C weiter. Produkt: Mₙ=910, PDI= 1,38, die Isocyanat-Gruppen wurden vollständig umgesetzt, Hydroxy-Endgruppen sind nicht mehr nachweisbar (bestimmt über ¹³C-NMR-Spektroskopie); das Verhältnis von Acrylat-Doppelbindungen zu Silan-Gruppen beträgt 1,05 zu 1 (bestimmt über ¹H-NMR-Spektroskopie; Theorie: 1:1).

Im Anschluss wird das Reaktionsgemisch auf 30°C abgekühlt und mit 14,65 g Benzylamin versetzt. Man rührt noch 8 h, wobei die Temperatur 35°C nicht übersteigt. Die Acrylat-Gruppen wurden vollständig umgesetzt (bestimmt über ¹H-NMR-Spektroskopie).

### II Anwendung der Vermittleradditive

Die nachfolgende Angabe von "Teilen" bezieht sich stets auf Gewichtsteile.

Folgende kommerziell verfügbare Komponenten kommen in den beispielhaften Polymermischungen zum Einsatz:

| | |
|---|---|
| Araldite GY783 | Epoxid-Harz der Fa. Huntsman (ein niedrigviskoses, kristallisationsbeständiges Epoxidharz basierend auf Bisphenol A/F und modifiziert mit einem Reaktivverdünner) |
| Araldite GY784 | Epoxid-Harz der Fa. Huntsman (ein niedrigviskoses Epoxidharz basierend auf Bisphenol A und modifiziert mit einem Reaktivverdünner) |
| SiQ-Epox 4305 | Epoxid-Harz der Fa. SIQ-Chemie, Marl (ein niedrigviskoses, modifiziertes, weitgehend kristallisationsbeständiges Epoxidharz) |
| Aradur 43 BD | Härter der Fa. Huntsman (ein niedrigviskoser, modifizierter, cycloaliphatischer Polyamin-Härter) |
| Aradur 49 BD | Härter der Fa. Huntsman (ein niedrigviskoses, formuliertes Polyaminaddukt) |
| BYK-A 501 | Entlüfter der Fa. BYK-Chemie GmbH (Lösung schaumzerstörender Polymere, silikonfrei) |
| BYK-A 530 | Entlüfter der Fa. BYK-Chemie GmbH (Lösung schaumzerstörender Polymere und Polysiloxane) |

Als Füllstoffe wurden eingesetzt: Quarzmehl Millisil W 3 und Quarzsand F32. Die Produkte stammen von der Firma Quarzwerke.

(A) Messung der Biegefestigkeit und Menge des durch das Vermittleradditiv freigesetzten Alkohols

### Allgemeine Herstellvorschrift für die Probenplatten:

Zunächst werden Harz und Härter ggf. zusammen mit Entlüfter und Vermittler-Additiv mit einem Spatel von Hand in einem Kunststoffgefäß aus Polyethylen miteinander verrührt.

Die Füllstoffe werden von Hand zugegeben und ebenfalls von Hand bei Raumtemperatur mit einem Metallspatel verrührt, bis eine homogene Mischung entstanden ist. Anschließend wird mit einem Dissolver (Pendraulik TD-100, Zahnscheibe) bei 930 Umdrehungen pro Minute für einen Zeitraum von einer Minute dispergiert.

Nach dem Dispergieren wird die Mischung in eine Form (Abmessung: 21 cm x 32 cm) gegossen und mit einem Spachtel verteilt. Das Tablett wird 30 Mal leicht auf den Tisch geschlagen, um die Mischung zu komprimieren und zu entlüften.

Die bei Hydrolyse freigesetzten Mengen an Alkohol wurden mittels stöchiometrischer Berechnung bestimmt.

### Beispiel A1 (kein Vermittleradditiv, Vergleichsbeispiel):

Eine Mischung bestehend aus 171 Teilen Araldite GY783, 95 Teilen Aradur 49 BD, 250 Teilen Millisil W3, 500 Teilen Quarzsand F32 und 0,1 Teilen BYK-A 530 wird gemäß vorstehender allgemeiner Herstellvorschrift zu Probenplatten verarbeitet. Nach dem vollständigen Aushärten werden aus der Platte Probenkörper geschnitten, welche der Prüfnorm DIN EN ISO 178 entsprechen. Die gemessene Biegefestigkeit beträgt 36,7 N/mm².

### Beispiel A2 (niedermolekulares Vermittleradditiv, nicht erfindungsgemäß):

Eine Mischung bestehend aus 171 Teilen Araldite GY783, 95 Teilen Aradur 49 BD, 250 Teilen Millisil W3, 500 Teilen Quarzsand F32, 0,1 Teilen BYK-A 530 und 0,375 Teilen 3-Aminopropyltriethoxysilan (0,05 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 37,5 N/mm².

Pro kg der Gesamtmischung werden durch vollständige Hydrolyse 234 mg Ethanol freigesetzt.

### Beispiel A3 (erfindungsgemäß):

Eine Mischung bestehend aus 171 Teilen Araldite GY783, 95 Teilen Aradur 49 BD, 250 Teilen Millisil W3, 500 Teilen Quarzsand F32, 0,1 Teilen BYK-A 530 und 0,375 Teilen des Vermittleradditivs 5 (0,05 Gew.% bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 48,7 N/mm².

Pro kg der Gesamtmischung werden durch vollständige Hydrolyse 71 mg Ethanol freigesetzt.

### Beispiel A4 (niedermolekulares Vermittleradditiv, nicht erfindungsgemäß):

Eine Mischung bestehend aus 171 Teilen Araldite GY783, 95 Teilen Aradur 49 BD, 250 Teilen Millisil W3, 500 Teilen Quarzsand F32, 0,1 Teilen BYK-A 530 und 0,75 Teilen 3-Aminopropyltriethoxysilan (0,1 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 38,0 N/mm².

Pro kg der Gesamtmischung werden durch vollständige Hydrolyse 461 mg Ethanol freigesetzt.

### Beispiel A5 (erfindungsgemäß):

Eine Mischung bestehend aus 171 Teilen Araldite GY783, 95 Teilen Aradur 49 BD, 250 Teilen Millisil W3, 500 Teilen Quarzsand F32, 0,1 Teilen BYK-A 530 und 0,75 Teilen des Vermittleradditivs 7 (0,1 Gew.% der Lösung, d.h. 0,04% der Wirksubstanz bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 46,7 N/mm².

Pro kg der Gesamtmischung werden durch vollständige Hydrolyse 87 mg Ethanol freigesetzt.

### Beispiel A6 (niedermolekulares Vermittleradditiv, nicht erfindungsgemäß):

Eine Mischung bestehend aus 171 Teilen Araldite GY783, 95 Teilen Aradur 49 BD, 250 Teilen Millisil W3, 500 Teilen Quarzsand F32, 0,1 Teilen BYK-A 530 und 2,25 Teilen 3-Aminopropyltriethoxysilan (0,3 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 44,9 N/mm².

Pro kg der Gesamtmischung werden durch vollständige Hydrolyse 1378 mg Ethanol freigesetzt.

### Beispiel A7 (erfindungsgemäß):

Eine Mischung bestehend aus 171 Teilen Araldite GY783, 95 Teilen Aradur 49 BD, 250 Teilen Millisil W3, 500 Teilen Quarzsand F32, 0,1 Teilen BYK-A 530 und 2,25 Teilen des Vermittleradditivs 8 (0,3 Gew.% der Lösung, d.h. 0.12 Gew.% der Wirksubstanz bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 50,3 N/mm².

Pro kg der Gesamtmischung werden durch vollständige Hydrolyse 164 mg Ethanol freigesetzt.

### Beispiel B1 (kein Vermittleradditiv, Vergleichsbeispiel):

Eine Mischung bestehend aus 171 Teilen Araldite 784, 95 Teilen Aradur 43 BD, 250 Teilen Millisil W3, 500 Teilen Quarzsand F32 und 0,1 Teilen BYK-A 530 wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 22,4 N/mm².

### Beispiel B2 (niedermolekulares Vermittleradditiv, nicht erfindungsgemäß):

Eine Mischung bestehend aus 171 Teilen Araldite 784, 95 Teilen Aradur 43 BD, 250 Teilen Millisil W3, 500 Teilen Quarzsand F32, 0,1 Teilen BYK-A 530 und 2,25 Teilen 3-Aminopropyltriethoxysilan (0,3 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 33,0 N/mm².

Pro kg der Gesamtmischung werden durch vollständige Hydrolyse 1378 mg Ethanol freigesetzt.

### Beispiel B3 (erfindungsgemäß):

Eine Mischung bestehend aus 171 Teilen Araldite 784, 95 Teilen Aradur 43 BD, 250 Teilen Millisil W3, 500 Teilen Quarzsand F32, 0,1 Teilen BYK-A 530 und 2,25 Teilen des Vermittleradditivs 8 (0,3 Gew.% der Lösung, d.h. 0.12 Gew.% der Wirksubstanz bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 36,8 N/mm².

Pro kg der Gesamtmischung werden durch vollständiger Hydrolyse 164 mg Ethanol freigesetzt.

### Beispiel C1 (kein Vermittleradditiv, Vergleichsbeispiel):

Eine Mischung bestehend aus 171 Teilen SiQ-Epox 4305, 95 Teilen Aradur 43 BD, 250 Teilen Millisil W3, 500 Teilen Quarzsand F32 und 0,1 Teilen BYK-A 530 wird gemäß vorstehender allgemeiner Herstellvorschrift zu Probenplatten verarbeitet. Nach dem vollständigen Aushärten werden aus der Platte Probenkörper geschnitten, welche der Prüfnorm DIN EN ISO 178 entsprechen. Die gemessene Biegefestigkeit beträgt 32,2 N/mm².

### Beispiel C2 (niedermolekulares Vermittleradditiv, nicht erfindungsgemäß):

Eine Mischung bestehend aus 171 Teilen SiQ-Epox 4305, 95 Teilen Aradur 43 BD, 250 Teilen Millisil W3, 500 Teilen Quarzsand F32, 0,1 Teilen BYK-A 530 und 2,25 Teilen 3-Aminopropyltrimethoxysilan (0,3 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 39,5 N/mm².

Pro kg der Gesamtmischung werden durch vollständige Hydrolyse 1184 mg Methanol freigesetzt.

### Beispiel C3 (erfindungsgemäß):

Eine Mischung bestehend aus 171 Teilen SiQ-Epox 4305, 95 Teilen Aradur 43 BD, 250 Teilen Millisil W3, 500 Teilen Quarzsand F32, 0,1 Teilen BYK-A 530 und 2,25 Teilen des Vermittleradditivs 9 (0,3 Gew.% der Lösung, d.h. 0.12 Gew.% der Wirksubstanz bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 46,1 N/mm².

Pro kg der Gesamtmischung werden durch vollständige Hydrolyse 122 mg Methanol freigesetzt.

### Beispiel D1 (kein Vermittleradditiv, Vergleichsbeispiel):

Eine Mischung bestehend aus 171 Teilen SiQ-Epox 4305, 95 Teilen Aradur 49 BD, 250 Teilen Millisil W3, 500 Teilen Quarzsand F32 und 0,1 Teilen BYK-A 501 wird gemäß vorstehender allgemeiner Herstellvorschrift zu Probenplatten verarbeitet. Nach dem vollständigen Aushärten werden aus der Platte Probenkörper geschnitten, welche der Prüfnorm DIN EN ISO 178 entsprechen. Die gemessene Biegefestigkeit beträgt 49,2 N/mm².

### Beispiel D2 (niedermolekulares Vermittleradditiv, nicht erfindungsgemäß):

Eine Mischung bestehend aus 171 Teilen SiQ-Epox 4305, 95 Teilen Aradur 49 BD, 250 Teilen Millisil W3, 500 Teilen Quarzsand F32, 0,1 Teilen BYK-A 501 und 2,25 Teilen 3-Aminopropyltriethoxysilan (0,3 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 56,1 N/mm².

Pro kg der Gesamtmischung werden durch vollständige Hydrolyse 1378 mg Ethanol freigesetzt.

### Beispiel D3 (niedermolekulares Vermittleradditiv, nicht erfindungsgemäß):

Eine Mischung bestehend aus 171 Teilen SiQ-Epox 4305, 95 Teilen Aradur 49 BD, 250 Teilen Millisil W3, 500 Teilen Quarzsand F32, 0,1 Teilen BYK-A 501 und 2,25 Teilen 3-Glycidyloxypropyltrimethoxysilan (0,3 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 57,2 N/mm².

Pro kg der Gesamtmischung werden durch vollständige Hydrolyse 899 mg Methanol freigesetzt.

### Beispiel D4 (niedermolekulares Vermittleradditiv, nicht erfindungsgemäß):

Eine Mischung bestehend aus 171 Teilen SiQ-Epox 4305, 95 Teilen Aradur 49 BD, 250 Teilen Millisil W3, 500 Teilen Quarzsand F32, 0,1 Teilen BYK-A 501 und 2,25 Teilen 3-Glycidyloxypropyltriethoxysilan (0,3 Gew.% bezogen auf den Füllstoff) als Vermittleradditiv wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 50,9 N/mm².

Pro kg der Gesamtmischung werden durch vollständige Hydrolyse 1096 mg Ethanol freigesetzt.

### Beispiel D5 (erfindungsgemäß):

Eine Mischung bestehend aus 171 Teilen SiQ-Epox 4305, 95 Teilen Aradur 49 BD, 250 Teilen Millisil W3, 500 Teilen Quarzsand F32, 0,1 Teilen BYK-A 501 und 2,25 Teilen des Vermittleradditivs 10 (0,3 Gew.% der Lösung, d.h. 0,12 % der Wirksubstanz bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 60,3 N/mm².

Pro kg der Gesamtmischung werden durch vollständige Hydrolyse 65 mg Methanol freigesetzt.

### Beispiel D6 (erfindungsgemäß):

Eine Mischung bestehend aus 171 Teilen SiQ-Epox 4305, 95 Teilen Aradur 49 BD, 250 Teilen Millisil W3, 500 Teilen Quarzsand F32, 0,1 Teilen BYK-A 501 und 2,25 Teilen des Vermittleradditivs 11 (0,3 Gew.% der Lösung, d.h. 0,12 % der Wirksubstanz bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 61,6 N/mm².

Pro kg der Gesamtmischung werden durch vollständige Hydrolyse 121 mg Methanol freigesetzt.

### Beispiel D7 (erfindungsgemäß):

Eine Mischung bestehend aus 171 Teilen SiQ-Epox 4305, 95 Teilen Aradur 49 BD, 250 Teilen Millisil W3, 500 Teilen Quarzsand F32, 0,1 Teilen BYK-A 501 und 2,25 Teilen des Vermittleradditivs 12 (0,3 Gew.% der Lösung, d.h. 0,12 % der Wirksubstanz bezogen auf den Füllstoff) wird gemäß vorstehender allgemeiner Herstellvorschrift zu Probenplatten verarbeitet.

Nach dem vollständigen Aushärten werden aus der Platte Probenkörper geschnitten, welche der Prüfnorm DIN EN ISO 178 entsprechen. Die gemessene Biegefestigkeit beträgt 62,8 N/mm².

Pro kg der Gesamtmischung werden durch vollständige Hydrolyse 88 mg Methanol freigesetzt.

### (B) Messung der Viskosität

Eine Mischung bestehend aus 100 Teilen SiQ-Epox 4305, 150 Teilen Millisil W8 sowie 1,5 Teilen der in Tab. 1a bzw. 1b angegebenen Substanz als Vermittleradditiv werden 2 min lang mit einem Dissolver Typ Pendraulik TD-100 unter Nutzung einer Zahnscheibe bei 1865 Umdrehungen pro Minute homogenisiert und hiernach 2 min bei Raumtemperatur stehengelassen.

Sofort hiernach wird mit Hilfe eines Brookfield RV Viskosimeters (Firma Brookfield GmbH, Lorch; Spindel 5) bei 23°C die Viskosität bestimmt. Die Messungen erfolgten bei 5 und 10 U/min.

**Tab. 1a: Messung bei 5 U/min.**

| *Additiv* | *Viskosität in Pa.s* |
|---|---|
| Nullprobe | 33,6 |
| 3-Aminopropyltriethoxysilan | 59,8 |
| Vermittleradditiv 6 | 19,9 |
| Vermittleradditiv 21 | 20,4 |
| Vermittleradditiv 22 | 19,4 |
| Dowanol PMA (Kontrollversuch) | 30,6 |

**Tab. 1b: Messung bei 10 U/min.**

| *Additiv* | *Viskosität in Pa.s* |
|---|---|
| Nullprobe | 27,7 |
| 3-Aminopropyltriethoxysilan | 36,2 |
| Vermittleradditiv 6 | 16,9 |
| Vermittleradditiv 21 | 17,3 |
| Vermittleradditiv 22 | 16,8 |
| Dowanol PMA (Kontrollversuch) | 26,0 |

Aus den Tabellen 1a und 1b ist ersichtlich, dass die Viskosität der Mischung durch Einsatz von 3-Aminopropyltriethoxysilan als Vermittleradditiv gegenüber der Nullprobe erhöht wird, während die erfindungsgemäßen Vermittleradditive gegenüber der Nullprobe sogar zu einer Viskositätsreduzierung führen. Der Kontrollversuch, bei dem anstelle eines Vermittleradditivs nur das Lösungsmittel Dowanol PMA eingesetzt wurde, zeigt, dass die viskositätsreduzierende Wirkung der Vermittleradditive nicht auf den Einfluss des enthaltenen Lösungsmittels zurückzuführen ist.

## Patentansprüche

1. Härtbare Polymermischung umfassend
I) als Vermittleradditiv
a) wenigstens ein mindestens oligomeres Additionsprodukt
von wenigstens einem mindestens eine hydrolysierbare Silangruppe aufweisenden Aminosilan und ggf. Thiosilan oder
eine Kombination aus wenigstens einem solchen Aminosilan und/oder Thiosilan und mindestens einem weiteren Monoamin und/oder Polyamin mit mindestens 2 Aminogruppen
an mindestens eine wenigstens zwei endständige, ethylenisch ungesättigte Doppelbindungen aufweisenden Verbindung
und/oder
b) wenigstens ein mindestens oligomeres Additionsprodukt
von wenigstens einem mindestens eine hydrolysierbare Silangruppe aufweisendes Isocyanatsilan und/oder Epoxysilan
an mindestens eine wenigstens eine endständige Hydroxygruppe und wenigstens eine endständige, ethylenisch ungesättigte Doppelbindung aufweisende Verbindung in Kombination mit wenigstens einem Monoamin und/oder Polyamin mit mindestens 2 Aminogruppen
und/oder
c) wenigstens ein mindestens oligomeres Additionsprodukt
von wenigstens einem mindestens eine hydrolysierbare Silangruppe und mindestens eine (Meth)acrylat-Gruppe aufweisenden Silan,
oder wenigstens einem mindestens eine hydrolysierbare Silangruppe und mindestens eine cyclische Dicarbonsäureanhydridgruppe aufweisenden Silan
an mindestens eine wenigstens zwei endständige Aminogruppen aufweisende Verbindung
und/oder
d) wenigstens ein mindestens oligomeres Additionsprodukt
von wenigstens einem mindestens eine hydrolysierbare Silangruppe aufweisenden Isocyanatsilan und/oder Epoxysilan
an mindestens eine wenigstens zwei endständige Aminogruppen aufweisende Verbindung ggfs. in Kombination mit mindestens einem weiteren Monoisocyanat und/oder einer Epoxid-Verbindung
und/oder
e) wenigstens ein mindestens oligomeres Additionsprodukt
von wenigstens einem mindestens eine hydrolysierbare Silangruppe aufweisenden Aminosilan und/oder Thiosilan
an mindestens eine wenigstens zwei endständige Epoxygruppen aufweisende Verbindung,
II) als Bindemittel
ein härtbares System umfassend mindestens ein wenigstens 2 Epoxid-Endgruppen aufweisendes Polymeres, das zumindest teilweise unter Beteiligung der Epoxidgruppen dieses Polymeren mit den Aminogruppen wenigstens einer der Komponenten I) a)-d) und/oder den Epoxidgruppen der Komponente I) e) härtbar ist, und mindestens eine weitere Härterkomponente und ggf. einen Beschleuniger,
III) als Zuschlagstoffe
wenigstens 20 Gew.%, bezogen auf das Gesamtgewicht der Polymermischung, anorganischer, ggfs. multipartikularer Füllstoffe und
IV) ggf. übliche Hilfsstoffe,
wobei die härtbare Polymermischung weniger als 5 Gew.%, bezogen auf das Gesamtgewicht der Polymermischung, der Vermittleradditiv-Komponente I) enthält.

2. Härtbare Polymermischung nach Anspruch 1, **dadurch gekennzeichnet, dass** die Bindemittel-Komponente II) in einer Menge kleiner 80 Gew.%, bezogen auf das Gesamtgewicht der Polymermischung, vorliegt.

3. Härtbare Polymermischung nach einem der Ansprüche 1 bis 2, **dadurch gekennzeichnet, dass** als anorganische Füllstoffe Füllstoffe aus anorganischen, siliziumhaltigen Verbindungen, Alumosilicate, Aluminiumsilicate und/oder anorganische Sauerstoffverbindungen von Aluminium und/oder Magnesium, wie Aluminiumoxide, Aluminiumhydroxide, Aluminiumoxidhydroxide und/oder Magnesiumhydroxide, in jeder Form wie in Form von Gesteinskörnungen und/oder losen oder verbundenen, endlosen oder geschnittenen Fasern vorliegen.

4. Härtbare Polymermischung nach Anspruch 3, **dadurch gekennzeichnet, dass** als anorganische, siliziumhaltige Verbindungen oxidische Siliciumverbindung in Form kontinuierlicher Fasern vorliegen, die als gebündelte Stränge, Gewebe oder Gelege, ggfs. in Kombination mit Füllstoffen nach Anspruch 3 in multipartikulärer Form zum Einsatz kommen können.

5. Härtbare Polymermischung nach Anspruch 3 oder 4, **dadurch gekennzeichnet, dass** die anorganische Füllstoff-Komponente III) zumindest mit einem Teil der Vermittleradditiv-Komponente I) vorbehandelt ist.

6. Härtbare Polymermischung nach einem der Ansprüche 1 bis 5, **dadurch gekennzeichnet, dass** das in der Bindemittelkomponente II) vorliegende, mindestens 2 Epoxid-Endgruppen aufweisende Polymere mindestens ein Epoxidharz ist und als Härterkomponente aliphatische und/oder aromatische Polyamine, Polycarbonsäuren, deren cyclische Anhydride oder Amide, Polyphenole, Aminoharze, Phenolharze aufweist.

7. Härtbare Polymermischung nach einem der Ansprüche 1 bis 6, **dadurch gekennzeichnet, dass** die zur Herstellung des Additionsproduktes Ia) verwendeten, endständige Doppelverbindungen aufweisende Verbindungen als Doppelbindungen Methacrylatgruppen oder Acrylatgruppen aufweisen,
die zur Herstellung des Additonsproduktes Ib) verwendeten Verbindungen neben mindestens einer endständigen Hydroxygruppe als endständige Doppelbindung wenigstens eine Acrylat- oder Methacrylatgruppe aufweisen,
die zur Herstellung des Additionsprodukte Ic) bzw. Id) verwendeten, endständige Aminogruppen aufweisende Verbindungen als Aminogruppen primäre, sekundäre oder tertiäre Aminogruppen aufweisen, von denen mindestens eine eine primäre oder sekundäre Aminogruppe ist,
und die zur Herstellung des Additionsprodukts Ie) verwendeten, endständige Epoxidgruppen aufweisende Verbindungen als Epoxidgruppen Glycidethergruppen aufweisen.

8. Härtbare Polymermischung nach einem der Ansprüche 1 bis 7, **dadurch gekennzeichnet, dass** jedes der Additionsprodukte Ia) - Ie) als wenigstens eine Additionskomponente, die mit der Silan-Komponente reagiert, wenigstens eine oligomere Verbindung mit entsprechend funktionellen Endgruppen, wie einen Polyether, gesättigten Polyester, ein Polyamid, gesättigtes Polyesteramid und/oder einen gesättigten Polyesterpolyether mit jeweils
wenigstens zwei ethylenisch ungesättigte Doppelbindungen als Endgruppen
oder
wenigstens eine endständige, ethylenisch ungesättigte Doppelbindung und wenigstens eine endständige Hydroxy-Gruppe
oder
mindestens zwei endständige Aminogruppen
oder
mindestens zwei endständige Epoxidgruppen,
aufweist.

9. Härtbare Polymermischung nach einem der Ansprüche 1 bis 8, **dadurch gekennzeichnet, dass** als eine wenigstens eine hydrolysierbare Silangruppe aufweisende Verbindung eine Verbindung der allgemeinen Formel 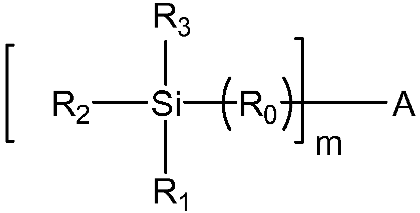 eingesetzt wurde, in der
A für eine Epoxidgruppe, eine Glycidyloxygruppe, eine Isocyanatgruppe, eine -SH Gruppe, eine (Meth)acrylatgruppe, eine cyclische Dicarbonsäureanhydrid-Gruppe oder eine -N(H)-X Gruppe steht, wobei X für Wasserstoff, einen ggf. verzweigten Alkylrest mit 1 bis 6 C-Atomen, einen Arylrest mit 6 bis 10 C-Atomen oder eine Cycloalkylrest mit 4 bis 6 C-Atomen steht und jeder dieser X-Reste mit einer primären oder sekundären Aminogruppe substituiert sein kann, oder A eine -NH-Gruppe bedeutet, wenn m eine ganze Zahl 2 ist,
R₀ für einen ggf. verzweigten Alkylenrest mit 1 bis 12 C-Atomen, eine Cycloalkylenrest mit 4 bis 6 C-Atomen oder einen Arylenrest mit 6 bis 10 C-Atomen steht,
R₁ für einen ggf. verzweigten Alkylrest mit 1 bis 7 C-Atomen, ein Halogen, eine -O-C(=O)-R₄ Gruppe oder eine -OR₄ Gruppe steht, wobei R₄ für Wasserstoff, eine Methoxyethylgruppe oder einen ggf. verzweigten Alkylrest mit 1 bis 7 C-Atomen oder einen Cycloalkylrest mit 4 bis 6 C-Atomen steht,
R₂ für einen ggf. verzweigten Alkylrest mit 1 bis 7 C-Atomen, eine -O-C(=O)-R₄-Gruppe, ein Halogen oder eine -OR₄-Gruppe steht, wobei R₄ für Wasserstoff, eine Methoxyethylgruppe oder einen ggf. verzweigten Alkylrest mit 1 bis 7 C-Atomen, oder einen Cycloalkylrest mit 4 bis 6 C-Atomen steht,
R₃ für eine -O-C(=O)-R₄-Gruppe, ein Halogen oder eine -OR₄-Gruppe steht, wobei R₄ für eine Methoxyethylgruppe oder einen ggf. verzweigten Alkylrest mit 1 bis 7 C-Atomen oder einen Cycloalkylrest mit 4 bis 6 C-Atomen steht,
und
m für eine ganze Zahl 1 oder 2 steht.

10. Eine härtbare Polymermischung nach einem der Ansprüche 1 - 9, **dadurch gekennzeichnet, dass** zur Herstellung des Additionsprodukts Ia) eine Kombination aus einem Aminosilan gemäß Anspruch 9 und mindestens ein Polyamin mit mindestens 2 Aminogruppen eingesetzt wird, wobei das Polyamin mindestens eine primäre Aminogruppe und zudem mindestens eine sekundäre oder eine weitere primäre Aminogruppe aufweist.

11. Eine härtbare Polymermischung nach Anspruch 1 - 10, **dadurch gekennzeichnet, dass**
im Additionsprodukt Ia) 5 bis 95 mol% der (meth)acrylischen Doppelbindungen mit dem Aminosilan und ggf. Thiosilan und der Rest dieser Doppelbindungen mit mindestens einem Polyamin umgesetzt vorliegen,
im Additionsprodukt Ib) die OH-Gruppen mit dem Epoxysilan oder dem Isocyanatosilan zu mehr als 80 mol%, und die (meth)acrylischen Doppelbindung mit dem Monoamin und/oder Polyamin zu mehr als 80mol% umgesetzt vorliegen,
im Additionsprodukt Ic) 5 bis 95 mol% der Aminogruppen mit den (Meth)acrylatsilanen oder den Säureanhydridgruppen aufweisenden Silanen umgesetzt vorliegen,
im Additionsprodukt Id) 5 bis 95 mol% der Aminogruppen mit den Isocyanatsilanen und/oder Epoxysilanen umgesetzt vorliegen und
im Additionsprodukt Ie) 5 bis 95 mol% der Epoxygruppen mit dem Aminosilan und/oder Thiosilan umgesetzt vorliegen.

12. Härtbare Polymermischung nach einem der Ansprüche 1 bis 11, **dadurch gekennzeichnet, dass** die Polymermischung eine härtbare Polymerbetonmischung ist.

13. Verwendung von wenigstens einem Additionsprodukt Ia) - e) nach einem der Ansprüche 1, 7 bis 11 als Vermittleradditiv in einer härtbaren Polymermischung, basierend auf einem härtbaren System als Bindemittel gemäß Anspruch 1 oder 6, das mit mindestens 20 Gew.-%, bezogen auf das Gesamtgewicht der Polymermischung, ggf. multipartikulärer und ggf. verteilbarer, anorganischer Füllstoffe oder mit mindestens 20 Gew.-%, bezogen auf das Gesamtgewicht der Polymermischung, kontinuierlicher, faserförmiger, anorganischer Füllstoffe als Zuschlagsstoffe III) und ggf. üblicher Hilfsstoffe ausgestattet ist.

14. Ein Verfahren zur Herstellung einer härtbaren Polymermischung nach einem der Ansprüche 1 - 12, **dadurch gekennzeichnet, dass** man wenigstens ein Vermittleradditiv Ia) - Ie) nach einem der Ansprüche 1, 7 bis 11 mit einem härtbarem System gemäß Anspruch 1 oder 6 mit ggfs. multipartikulären, ggfs. verteilbaren, anorganischen Füllstoffen als Zuschlagsstoffen III) und ggf. üblichen Hilfsstoffen vermischt oder mit kontinuierlichen, faserförmigen, anorganische Füllstoffe ggfs. in Form von Geweben oder Gelegen als Zuschlagsstoffe III) und ggf. üblichen Hilfsstoffen zusammenbringt, wobei die anorganische Füllstoff-Komponente III) zumindest mit einem Teil der Vermittleradditiv-Komponente I) vorbehandelt sein kann, und die Mischung in bekannter Weise unter Aushärtung polymerisiert.

15. Ein Kunststoffformkörper, der nach einem Verfahren gemäß Anspruch 14 erhältlich ist.

## Claims

1. Curable polymer mixture comprising
I)
a) at least one at least oligomeric addition product
of at least one aminosilane and optionally thiosilane having at least one hydrolyzable silane group or
a combination of at least one such aminosilane and/or thiosilane and at least one further monoamine and/or polyamine having at least 2 amino groups
onto at least one compound having at least two terminal, ethylenically unsaturated double bonds
and/or
b) at least one at least oligomeric addition product
of at least one isocyanatosilane and/or epoxysilane having at least one hydrolyzable silane group
onto at least one compound having at least one terminal hydroxy group and at least one terminal, ethylenically unsaturated double bond in combination with at least one monoamine and/or polyamine having at least 2 amino groups
and/or
c) at least one at least oligomeric addition product
of at least one silane having at least one hydrolysable silane group and at least one (meth)acrylate group
or at least one silane having at least one hydrolyzable silane group and at least one cyclic dicarboxylic anhydride group onto at least one compound having at least two terminal amino groups
and/or
d) at least one at least oligomeric addition product
of at least one isocyanatosilane and/or epoxysilane having at least one hydrolyzable silane group
onto at least one compound having at least two terminal amino groups optionally in combination with at least one further monoisocyanate and/or an epoxide compound
and/or
e) at least one at least oligomeric addition product
of at least one aminosilane and/or thiosilane having at least one hydrolyzable silane group onto at least one compound having at least two terminal epoxy groups as coupling additive,
II) as binder
a curable system which comprises at least one polymer having at least 2 epoxide end groups and can be at least partially cured by interaction of the epoxide groups of this polymer with the amino groups of at least one of the components I) a)-d) and/or the epoxide groups of the component I) e) and at least one further hardener component and optionally an accelerator,
III) at least 20% by weight, based on the total weight of the polymer mixture, of inorganic, optionally multiparticulate fillers as aggregates and
IV) optionally customary auxiliaries,
wherein the curable polymer mixture contains less than 5% by weight, based on the total weight of the polymer mixture, of the coupling additive component I).

2. Curable polymer mixture according to Claim 1, **characterized in that** the binder component II) is present in an amount of less than 80% by weight, based on the total weight of the polymer mixture.

3. Curable polymer mixture according to any of Claims 1 to 2, **characterized in that** fillers selected from among inorganic, silicon-containing compounds, aluminosilicates, aluminum silicates and inorganic oxygen compounds of aluminum and magnesium, such as aluminum oxides, aluminum hydroxides, aluminum oxide hydroxides and/or magnesium hydroxides, in any form, such as in the form of rock particle size fractions and/or loose or joined, continuous or cut fibers, are present as inorganic fillers.

4. Curable polymer mixture according to Claim 3, **characterized in that** oxidic silicon compounds in the form of continuous fibers, which can be used as bundled strands, woven fabrics or lay-ups, optionally in combination with fillers according to Claim 3 in multiparticulate form, are present as inorganic, silicon-containing compounds.

5. Curable polymer mixture according to Claim 3 or 4, **characterized in that** the inorganic filler component III) has been pretreated with at least part of the coupling additive component I).

6. Curable polymer mixture according to any of Claims 1 to 5, **characterized in that** the polymer having at least 2 epoxide end groups present in the binder component II) is at least one epoxy resin, and comprises aliphatic and/or aromatic polyamines, polycarboxylic acids, cyclic anhydrides or amides thereof, polyphenols, amino resins, phenolic resins, as hardener component.

7. Curable polymer mixture according to any of Claims 1 to 6, **characterized in that** the compounds having terminal double bonds which are used for preparing the addition product Ia) have methacrylate groups or acrylate groups, as double bonds,
the compounds used for preparing the addition product Ib) have at least one acrylate or methacrylate group, as terminal double bond in addition to at least one terminal hydroxy group,
the compounds having terminal amino groups which are used for preparing the addition products Ic) and/or Id) have primary, secondary or tertiary amino groups of which at least one is a primary or secondary amino group as amino groups,
and the compounds having terminal epoxide groups which are used for preparing the addition product Ie) have glycidyl ether groups as epoxide groups.

8. Curable polymer mixture according to any of Claims 1 to 7, **characterized in that** each of the addition products Ia) - Ie) has at least one oligomeric compound having appropriately functional end groups, such as a polyether, saturated polyester, a polyamide, saturated polyesteramide and/or a saturated polyester polyether having in each case
at least two ethylenically unsaturated double bonds as end groups
or
at least one terminal, ethylenically unsaturated double bond and at least one terminal hydroxy group
or
at least two terminal amino groups
or
at least two terminal epoxide groups,
as at least one addition component which reacts with the silane component.

9. Curable polymer mixture according to any of Claims 1 to 8, **characterized in that** a compound of the general formula 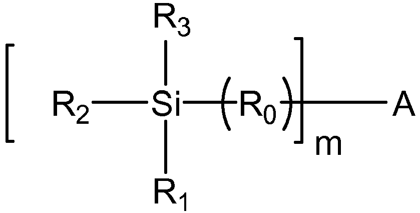 where
A is an epoxide group, a glycidyloxy group, an isocyanate group, an -SH group, a (meth)acrylate group, a cyclic dicarboxylic anhydride group or an -N(H)-X group, where X is hydrogen, an optionally branched alkyl radical having from 1 to 6 carbon atoms, an aryl radical having from 6 to 10 carbon atoms or a cycloalkyl radical having from 4 to 6 carbon atoms and each of these X radicals can be substituted by a primary or secondary amino group, or A is an -NH group when m is the integer 2,
R₀ is an optionally branched alkylene radical having from 1 to 12 carbon atoms, a cycloalkylene radical having from 4 to 6 carbon atoms or an arylene radical having from 6 to 10 carbon atoms,
R₁ is an optionally branched alkyl radical having from 1 to 7 carbon atoms, a halogen, an -O-C(=O)-R₄ group or an -OR₄ group, where R₄ is hydrogen, a methoxyethyl group or an optionally branched alkyl radical having from 1 to 7 carbon atoms, or a cycloalkyl radical having from 4 to 6 carbon atoms,
R₂ is an optionally branched alkyl radical having from 1 to 7 carbon atoms, an -O-C(=O)-R₄ group, a halogen or an -OR₄ group, where R₄ is hydrogen, a methoxyethyl group or an optionally branched alkyl radical having from 1 to 7 carbon atoms, or a cycloalkyl radical having from 4 to 6 carbon atoms,
R₃ is an -O-C(=O)-R₄ group, a halogen or an -OR₄ group, where R₄ is a methoxyethyl group or an optionally branched alkyl radical having from 1 to 7 carbon atoms, or a cycloalkyl radical having from 4 to 6 carbon atoms,
and
m is the integer 1 or 2, has been used as a compound having at least one hydrolyzable silane group.

10. Curable polymer mixture according to any of Claims 1 - 9, **characterized in that** a combination of an aminosilane according to Claim 9 and at least one polyamine having at least 2 amino groups, where the polyamine has at least one primary amino group and in addition at least one secondary amino group or a further primary amino group, is used for preparing the addition product Ia).

11. Curable polymer mixture according to Claim 1 - 10, **characterized in that**
from 5 to 95 mol% of the (meth) acrylic double bonds have been reacted with the aminosilane and optionally thiosilane and the rest of these double bonds have been reacted with at least one polyamine in the addition product Ia),
the OH groups have been reacted with the epoxysilane or the isocyanatosilane to an extent of more than 80 mol%, and the (meth)acrylic double bonds have been reacted with the monoamine and/or polyamine to an extent of more than 80 mol%, in the addition product Ib),
from 5 to 95 mol% of the amino groups have been reacted with the (meth)acrylatosilanes or the silanes having acid anhydride groups in the addition product Ic),
from 5 to 95 mol% of the amino groups have been reacted with the isocyanatosilanes and/or epoxysilanes in the addition product Id) and
from 5 to 95 mol% of the epoxy groups have been reacted with the aminosilane and/or thiosilane in the addition product Ie).

12. Curable polymer mixture according to any of Claims 1 to 11, **characterized in that** the polymer mixture is a curable polymer concrete mixture.

13. Use of at least one addition product I a) - e) according to any of Claims 1, 7 to 11 as coupling additive in a curable polymer mixture, which is based on a curable system according to Claim 1 or 6 as binder and is provided with at least 20% by weight, based on the total weight of the polymer mixture, of optionally multiparticulate and optionally dispersible, inorganic fillers or with at least 20% by weight, based on the total weight of the polymer mixture, of continuous, fibrous, inorganic fillers as aggregates III) and optionally conventional auxiliaries.

14. Process for producing a curable polymer mixture according to any of Claims 1 - 12, **characterized in that** at least one coupling additive Ia) - Ie) according to any of Claims 1, 7 to 11 is mixed with a curable system according to Claim 1 or 6 comprising optionally multiparticulate, optionally dispersible, inorganic fillers as aggregates III) and optionally conventional auxiliaries or is combined with continuous, fibrous, inorganic fillers, optionally in the form of woven fabrics or lay-ups as aggregates III) and optionally conventional auxiliaries, wherein the inorganic filler component III) can be pretreated at least with part of the coupling additive component I), and the mixture is polymerized in a known manner to effect curing.

15. Polymer molding which can be obtained by a process according to Claim 14.

## Revendications

1. Composition de polymère durcissable comprenant
I) en tant qu'additif médiateur
a) au moins un produit d'addition au moins oligomère
d'au moins un aminosilane et éventuellement thiosilane, comportant au moins un groupe silane hydrolysable ou
une association d'au moins un tel aminosilane et/ou thiosilane et d'au moins une autre monoamine et/ou polyamine comportant au moins 2 groupes amino
sur au moins un composé qui comporte au moins deux doubles liaisons à insaturation éthylénique en bout de chaîne
et/ou
b) au moins un produit d'addition au moins oligomère
d'au moins un isocyanate-silane et/ou époxysilane comportant au moins un groupe silane hydrolysable,
sur au moins un composé qui comporte au moins un groupe hydroxy en bout de chaîne et au moins une double liaison à insaturation éthylénique en bout de chaîne, en association avec au moins une monoamine et/ou polyamine comportant au moins 2 groupes amino
et/ou
c) au moins un produit d'addition au moins oligomère
d'au moins un silane comportant au moins un groupe silane hydrolysable et au moins un groupe (méth)acrylate,
ou d'au moins un silane comportant au moins un groupe silane hydrolysable et au moins un groupe anhydride d'acide dicarboxylique cyclique
sur au moins un composé qui comporte au moins deux groupes amino en bout de chaîne
et/ou
d) au moins un produit d'addition au moins oligomère
d'au moins un isocyanate-silane et/ou époxysilane comportant au moins un groupe silane hydrolysable,
sur au moins un composé qui comporte au moins deux groupes amino en bout de chaîne éventuellement en association avec au moins un autre mono-isocyanate et/ou un composé époxyde
et/ou
e) au moins un produit d'addition au moins oligomère
d'au moins un aminosilane et/ou thiosilane comportant au moins un groupe silane hydrolysable,
sur au moins un composé qui comporte au moins deux groupes époxyde en bout de chaîne,
II) en tant que liant
un système durcissable comprenant au moins un polymère comportant au moins 2 groupes époxyde en bout de chaîne, qui est durcissable au moins en partie avec participation des groupes époxyde de ce polymère avec les groupes amino d'au moins un des composants I) a)-d) et/ou les groupes époxyde du composant I) e), et au moins un autre composant durcisseur et éventuellement un accélérateur,
III) en tant qu'additifs
au moins 20 % en poids, par rapport au poids total de la composition de polymère, de charges inorganiques, éventuellement multiparticulaires et
IV) éventuellement des adjuvants usuels,
la composition de polymère durcissable contenant moins de 5 % en poids, par rapport au poids total de la composition de polymère, du composant additif médiateur I).

2. Composition de polymère durcissable selon la revendication 1, **caractérisée en ce que** le composant liant II) est présent en une quantité inférieure à 80 % en poids, par rapport au poids total de la composition de polymère.

3. Composition de polymère durcissable selon l'une quelconque des revendications 1 et 2, **caractérisée en ce qu'**en tant que charges inorganiques sont présentes des charges à base de composés siliciés inorganiques, d'aluminosilicates, de silicates d'aluminium et/ou de composés oxygénés inorganiques d'aluminium et/ou de magnésium, tels que les oxydes d'aluminium, les hydroxydes d'aluminium, les oxyde-hydroxydes d'aluminium et/ou les hydroxydes de magnésium, sous toute forme comme sous forme de grenailles et/ou de fibres continues ou coupées, libres ou liées,

4. Composition de polymère durcissable selon la revendication 3, **caractérisée en ce qu'**en tant que composés inorganiques siliciés sont présents des composés de silicium de type oxyde sous forme de fibres continues qui peuvent être utilisées sous forme de brins groupés, tissu ou nappe, éventuellement en association avec des charges selon la revendication 3 sous forme multiparticulaire.

5. Composition de polymère durcissable selon la revendication 3 ou 4, **caractérisée en ce que** le composant consistant en des charges inorganiques III) est prétraité au moins par une partie du composant additif médiateur I).

6. Composition de polymère durcissable selon l'une quelconque des revendications 1 à 5, **caractérisée en ce que** le polymère comportant au moins 2 groupes époxyde en bout de chaîne, présent dans le composant liant II), est au moins une résine époxy et comporte en tant que composant durcisseur des polyamines aliphatiques et/ou aromatiques, des acides polycarboxyliques, leurs amides ou anhydrides cycliques, des polyphénols, des résines aminoplastes, des résines phénoliques.

7. Composition de polymère durcissable selon l'une quelconque des revendications 1 à 6, **caractérisée en ce que** les composés comportant des doubles liaisons en bout de chaîne, utilisés pour la préparation du produit d'addition Ia), comportent en tant que doubles liaisons des groupes méthacrylate ou des groupes acrylate,
les composés utilisés pour la préparation du produit d'addition Ib) comportent en tant que double liaison en bout de chaîne, outre au moins un groupe hydroxy en bout de chaîne, au moins un groupe acrylate ou méthacrylate,
les composés comportant des groupes amino en bout de chaîne, utilisés pour la préparation du produit d'addition Ic) ou Id), comportent en tant que groupes amino des groupes amino primaires, secondaires ou tertiaires, dont au moins un est un groupe amino primaire ou secondaire,
et les composés comportant des groupes époxyde en bout de chaîne, utilisés pour la préparation du produit d'addition Ie), comportent en tant que groupes époxyde des groupes éther glycidylique.

8. Composition de polymère durcissable selon l'une quelconque des revendications 1 à 7, **caractérisée en ce que** chacun des produits d'addition Ia) - Ie) comporte en tant qu'au moins un composant d'addition, qui réagit avec le composant silane, au moins un composé oligomère comportant des groupes en bout de chaîne conformément fonctionnels, tels qu'un polyéther, un polyester saturé, un polyamide, un polyesteramide saturé et/ou un polyester-polyéther saturé, comportant chacun
au moins deux doubles liaisons à insaturation éthylénique en tant que groupes en bout de chaîne
ou
au moins une double liaison à insaturation éthylénique en bout de chaîne et au moins un groupe hydroxy en bout de chaîne
ou
au moins deux groupes amino en bout de chaîne
ou
au moins deux groupes époxyde en bout de chaîne.

9. Composition de polymère durcissable selon l'une quelconque des revendications 1 à 8, **caractérisée en ce qu'**en tant que composé comportant au moins un groupe silane hydrolysable on a utilisé un composé de formule générale 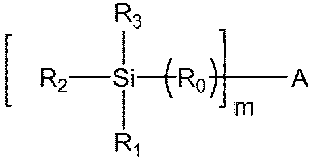 dans laquelle
A représente un groupe époxyde, un groupe glycidyloxy, un groupe isocyanate, un groupe -SH, un groupe (méth)acrylate, un groupe anhydride d'acide dicarboxylique cyclique ou un groupe -N(H)-X, où X représente un atome d'hydrogène, un radical alkyle éventuellement ramifié ayant de 1 à 6 atomes de carbone, un radical aryle ayant de 6 à 10 atomes de carbone ou un radical cycloalkyle ayant de 4 à 6 atomes de carbone, et chacun de ces radicaux X peut être substitué par un groupe amino primaire ou secondaire, ou A représente un groupe -NH lorsque m est un nombre entier 2,
R₀ représente un radical alkylène éventuellement ramifié ayant de 1 à 12 atomes de carbone, un radical cycloalkylène ayant de 4 à 6 atomes de carbone ou un radical arylène ayant de 6 à 10 atomes de carbone,
R₁ représente un radical alkyle éventuellement ramifié ayant de 1 à 7 atomes de carbone, un halogène, un groupe -O-C(=O)-R₄ ou un groupe -OR₄, R₄ représentant un atome d'hydrogène, un groupe méthoxyéthyle ou un radical alkyle éventuellement ramifié ayant de 1 à 7 atomes de carbone ou un radical cycloalkyle ayant de 4 à 6 atomes de carbone,
R₂ représente un radical alkyle éventuellement ramifié ayant de 1 à 7 atomes de carbone, un groupe -O-C(=O)-R₄, un halogène ou un groupe -OR₄, R₄ représentant un atome d'hydrogène, un groupe méthoxyéthyle ou un radical alkyle éventuellement ramifié ayant de 1 à 7 atomes de carbone, ou un radical cycloalkyle ayant de 4 à 6 atomes de carbone,
R₃ représente un groupe -O-C(=O)-R₄, un halogène ou un groupe -OR₄, R₄ représentant un groupe méthoxyéthyle ou un radical alkyle éventuellement ramifié ayant de 1 à 7 atomes de carbone ou un radical cycloalkyle ayant de 4 à 6 atomes de carbone,
et
m représente un nombre entier 1 ou 2.

10. Composition de polymère durcissable selon l'une quelconque des revendications 1 à 9, **caractérisée en ce que** pour la préparation du produit d'addition Ia) on utilise une association d'un aminosilane selon la revendication 9 et d'au moins une polyamine à au moins 2 groupes amino, la polyamine comportant au moins un groupe amino primaire et en outre au moins un groupe amino secondaire ou un autre groupe amino primaire.

11. Composition de polymère durcissable selon l'une quelconque des revendications 1 à 10, **caractérisée en ce que**
dans le produit d'addition Ia) 5 à 95 % en moles des doubles liaisons (méth)acryliques sont présentes en ayant réagi avec l'aminosilane et éventuellement le thiosilane et le reste de ces doubles liaisons sont présentes en ayant réagi avec au moins une polyamine,
dans le produit d'addition Ib) les groupes OH sont présents à raison de plus de 80 % en moles en ayant réagi avec l'époxysilane ou l'isocyanatosilane, et les doubles liaisons (méth)acryliques sont présentes à raison de plus de 80 % en moles en ayant réagi avec la monoamine et/ou la polyamine,
dans le produit d'addition Ic) 5 à 95 % en moles des groupes amino sont présents en ayant réagi avec les (méth)acrylate-silanes ou les silanes comportant des groupes anhydride d'acide,
dans le produit d'addition Id) 5 à 95 % en moles des groupes amino sont présents en ayant réagi avec les isocyanate-silanes et/ou époxysilanes et
dans le produit d'addition Ie) 5 à 95 % en moles des groupes époxyde sont présents en ayant réagi avec l'aminosilane et/ou le thiosilane.

12. Composition de polymère durcissable selon l'une quelconque des revendications 1 à 11, **caractérisée en ce que** la composition de polymère est une composition de béton polymère durcissable.

13. Utilisation d'au moins un produit d'addition la) - e) selon l'une quelconque des revendications 1, 7 à 11, en tant qu'additif médiateur dans une composition de polymère durcissable à base d'un système durcissable en tant que liant selon la revendication 1 ou 6, qui est muni d'au moins 20 % en poids, par rapport au poids total de la composition de polymère, de charges inorganiques éventuellement multiparticulaires et éventuellement dispersables ou d'au moins 20 % en poids, par rapport au poids total de la composition de polymère, de charges inorganiques fibreuses, continues, en tant qu'additifs III) et éventuellement d'adjuvants usuels.

14. Procédé pour la préparation d'une composition de polymère durcissable selon l'une quelconque des revendications 1 à 12, **caractérisé en ce qu'**on mélange au moins un additif médiateur Ia) - Ie) selon l'une quelconque des revendications 1, 7 à 11 avec un système durcissable selon la revendication 1 ou 6 avec des charges inorganiques éventuellement multiparticulaires, éventuellement dispersables, en tant qu'additifs III) et éventuellement des adjuvants usuels ou on le réunit avec des charges inorganiques fibreuses, continues, éventuellement sous forme de tissus ou nappes en tant qu'additifs III) et éventuellement des adjuvants usuels, le composant qui consiste en des charges inorganiques III) pouvant être prétraité au moins par une partie du composant additif médiateur I), et on polymérise le mélange avec durcissement de façon connue.

15. Corps moulé en matière plastique, qui peur être obtenu conformément à un procédé selon la revendication 14.
